# EUROPÄISCHE PATENTSCHRIFT

(11) **EP 3 359 490 B1**
(45) Veröffentlichungstag und Bekanntmachung des Hinweises auf die Patenterteilung: **29.07.2020**
(21) Anmeldenummer: 16781336.9
(22) Anmeldetag: 06.10.2016
(51) Int. Cl.: C01F 7/56, C01B 33/037, G01N 21/359, G01N 21/27, G01N 21/75, G01N 21/84

(54) **ONLINE ANALYTIK MITTELS NAHINFRAROTSPEKTROSKOPIE-ANALYTIK NIR ZUR HERSTELLUNG VON POLYALUMINIUMCHLORIDHYDROXID**
ONLINE ANALYTICS BY MEANS OF NEAR-INFRARED SPECTROSCOPY ANALYTICS (NIR) FOR THE PRODUCTION OF POLYALUMINIUM-CHLORIDE HYDROXIDE
ANALYSE EN LIGNE AU MOYEN D'UNE ANALYSE PAR SPECTROSCOPIE PROCHE INFRAROUGE (NIR) POUR PRODUIRE DU POLYHYDROXYCHLORURE D'ALUMINIUM

(30) Priorität: 07.10.2015 DE 102015219361; 30.11.2015 DE 102015223789
(43) Veröffentlichungstag der Anmeldung: 15.08.2018
(73) Patentinhaber: SMS Group GmbH, 40237 Düsseldorf (DE)
(72) Erfinder: STASTNY, Raffael, 1070 Wien (AT); WEISSENBAECK, Herbert, 1010 Wien (AT); ÖSTERREICHER, Markus, 1050 Wien (AT); PAMMINGER, Johannes, 1020 Wien (AT)
(74) Vertreter: Kross, Ulrich
(86) Internationale Anmeldenummer: PCT/EP2016/073830
(87) Internationale Veröffentlichungsnummer: WO 2017/060325

(56) Entgegenhaltungen:
- WO-A1-2011/127603
- US-A- 6 072 576
- WARD H W ET AL: "ON-LINE DETERMINATION OF REACTION COMPLETION IN A CLOSED-LOOP HYDROGENATOR USING NIR SPECTROSCOPY", APPLIED SPECTROSCOPY, THE SOCIETY FOR APPLIED SPECTROSCOPY. BALTIMORE, US, Bd. 52, Nr. 1, 1. Januar 1998 (1998-01-01) , Seiten 17-21, XP000774802, ISSN: 0003-7028, DOI: 10.1366/0003702981942582

## Beschreibung

Die Erfindung richtet sich auf ein Verfahren zur produktionstechnischen hydrometallurgischen Aufbereitung oder produktionstechnischen nasschemischen Umsetzung eines festen Ausgangsstoffes aus der Gruppe Si-Al-Komplex, Aluminiumhydroxid, Aluminiumchlorid oder Bauxit zu einem chemischen Reaktionsprodukt und/oder einem prozesstechnischen Nebenprodukt, wobei der Ausgangsstoff hydrometallurgisch oder nasschemisch mit einem flüssigen, Cl-Ionen haltigen wässrigen Medium zur Reaktion gebracht und das chemische Reaktionsprodukt und/oder das Nebenprodukt in Form einer Lösung erhalten wird/werden, die mindestens das als metallischer Inhaltsstoff im Ausgangsstoff enthaltene Aluminium (Al) in Form von Polyaluminiumchloridhydroxid (PAC) gemäß der Formel AlCl₃₋ₘ(OH)ₘ enthält, wobei die hydrometallurgische Aufbereitung das Lösen des metallischen Inhaltsstoffs Aluminium (Al) aus einer aluminiumhaltigen Verbindung des Ausgangsstoffes umfasst.

Insbesondere richtet sich die Erfindung auf ein Verfahren zur produktionstechnischen Herstellung einer Verbindung der Formel AlₙCl₍₃ₙ₋ₘ₎(OH)ₘ.

Weiterhin richte sich die Erfindung auf die Verwendung von Nahinfrarot - Analytik, insbesondere Nahinfrarotspektroskopie-Analytik, zur kontinuierlichen Online-Verfahrens- oder Prozesssteuerung eines Verfahrens zur Herstellung einer Verbindung der Formel AlₙCl₍₃ₙ₋ₘ₎(OH)ₘ.

Produktionstechnische Aufbereitungen und/oder die Herstellung von Stoffen, seien es Elemente oder Moleküle, sind im Stand der Technik wohl etabliert. Die Steuerung bzw. die Regelung dieser Prozesse stehen hierbei im häufig Fokus. Diese sollen so ausgestaltet werden, dass die wirtschaftliche Effizienz der Prozesse sowie eine hohe Produktqualität gewährleistet sind. Die Steuerung und Regelung solcher Aufbereitungs- und Herstellungsverfahren werden zudem häufig mittels mathematischer Modelle geführt. Diese Modelle basieren auf verschiedenen Faktoren, wie der Reaktionsstöchiometrie und der Eingangsgrößen, wie Rohstoffgewicht, Gehalt der Inhaltsstoffe, die im Rohstoff enthalten sind, dem Umsatz und den sich daraus ergebenden Massen- und/oder Volumenströmen von Prozessmedien. Die verwendeten Regelmodelle weisen jedoch häufig eine zu hohe Ungenauigkeit auf, die eine hohe Abweichung der Produktkonzentrationen und -zusammensetzung von mehr als +/- 3 % zur Folge hat. Daher müssen die so erhaltene Neben- oder Endprodukt aufwendig aufgearbeitet werden, um die beispielsweise von der NORM 883 maximal zugelassene Abweichung von +/-3 % relative Abweichung im Produkt zu den Herstellerangaben einzuhalten. Insbesondere gilt das Vorstehende für die Herstellung und Herstellprozesse von Polyaluminiumchloridhydroxid. Wird der erhaltene Stoff alternativ wieder in den Prozess eingespeist, ist aufgrund der Abweichungen ein stabiler Prozess nicht möglich. Ferner erfolgt die Überprüfung der eingesetzten Prozessmedien und des Prozessverlaufs herkömmlicherweise offline mittels Probeentnahme und anschließender Analyse außerhalb des laufenden Prozesses. Im Stand der Technik etablierte offline Analysetechniken, wie Titrationen, sind nachteilig, da sie zeitaufwendig sind und erst nach längerer Zeit auf den Prozess Einfluss genommen werden kann. Ferner ist bei einer kontinuierlichen Analytik eine hohe Zahl an Analyseapparaten und hoher personeller Aufwand notwendig.

Die auch als Polyaluminiumchloridhydroxid (PAC) bekannte Verbindung der Formel (I) AlₙCl₍₃ₙ₋ₘ₎(OH)ₘ fällt beispielsweise als lukratives Nebenprodukt in dem kaskadierten Löse- und Waschverfahren von Si-Al-Komplexen zur Reinigung von Si, das in der WO 2011/127603 A1 beschrieben ist, an. Ein kleiner Teil des anfallenden PACs wird aufgearbeitet und wieder als Beizmedium in das Verfahren eingespeist. Grundsätzlich wird PAC je nach Basizität auf verschiedenen Gebieten eingesetzt. So wird PAC mit einer schwachen bis geringen Basizität in einem Bereich von 25 % bis 45 % als Fällungsmittel in der Aufbereitung von Trinkwasser und Abwasser eingesetzt, wohingegen PAC mit einer Basizität von bis zu 70 % beispielsweise der Flockung von Trübstoffen aus wässrigen Medien dient. Des Weiteren wird PAC zur Gewässersanierung eingesetzt, um das Wachstum von Algen und nachteiligen Bakterien, wie Microthrix parvicella, zu unterbinden.

Das nach dem in der WO 2011/127603 A1 beschriebenen Verfahren erhaltene PAC weist in Abhängigkeit diverser Faktoren, wie beispielsweise der Zusammensetzung und der damit verbundenen Reaktivität des zu beizenden Si-Al-Komplexes, der Beizdauer und -temperatur sowie der Wasserverdampfung aus den Beizmedien, unterschiedliche Zusammensetzungen auf. Um eine hohe Produktqualität und einen stabilen Prozess zu gewährleisten, müssen die PAC-haltigen Beizmedien bestimmte lonenkonzentration, Dichten sowie bestimmte pH-Werte aufweisen. Diese hohen Anforderungen werden auch an produziertes PAC gestellt, welches im Stand der Technik unter anderem aus Aluminiumhydroxid Al(OH)₃ und Salzsäure HCl gewonnen wird. Das in der WO 2011/127603 A1 beschriebene Verfahren sowie das der herkömmlichen Gewinnung von PAC aus Al(OH)₃ und HCl kann mittels eines mathematischen Rechenmodelles geregelt und/oder gesteuert werden, so dass diese Prozesse die bekannten vorstehend erwähnten Nachteile aufweisen.

Weiterhin ist es aus der DE 1 020 008 A1 bekannt, Silizium-Rohmetall mittels einer Säurebehandlung zu Reinsilizium aufzubereiten.

Ein Polymerisations- oder Halogenisierungsverfahren zur Herstellung von Butylkautschuk ist aus der US 6,072,576 A bekannt.

Aufgabe der vorliegenden Erfindung ist es daher, ein Verfahren zur produktionstechnischen Aufarbeitung eines Ausgangsstoffs zu einem Neben- oder Endprodukt oder zur Herstellung eines Endprodukts zur Verfügung zu stellen, welches eine genaue und wirtschaftliche Prozessführung sowie eine gute Reproduzierbarkeit und eine genaue Einstellung der Zusammensetzung der erhaltenen Neben- und Endprodukte ermöglicht.

Bei einem Verfahren der eingangsnäher bezeichneten Art wird die Aufgabe erfindungsgemäß dadurch gelöst, dass in der erhaltenen Lösung und/oder dem erhaltenen Reaktionsprodukt und/oder dem erhaltenen Nebenprodukt online kontinuierlich während des laufenden Produktionsprozesses zumindest der Gehalt und/oder die Konzentration an Aluminium und/oder eines aus dem Cl-Ionen haltigen wässrigen Medium stammenden Cl-Ions oder Cl-Moleküls mittels Nahinfrarot-Analytik, insbesondere Nahinfrarotspektroskopie-Analytik (NIR), mit zwischen 0,1 sec und 30 sec, vorzugsweise zwischen 0,5 sec und 15 sec, vorzugsweise zwischen 1 sec und 10 sec, betragenden Zeitabständen zwischen den einzelnen aufeinanderfolgenden Messungen der Nahinfrarot-Analytik ermittelt wird/werden und auf Basis der ermittelten sowie zeitnah an ein mathematisches Regelmodell übermittelten Nahinfrarot-Messwerte, insbesondere Nahinfrarotspektroskopie-Messwerte, der mittels des Regelmodells beeinflussbare hydrometallurgische Aufbereitungsprozess unter zeitlich unmittelbarer Einflussnahme online derart gesteuert und/oder geregelt wird, dass das erhaltene Polyaluminiumchloridhydroxid (PAC) eine Basizität im Bereich von 30 - 90 %, bevorzugt im Bereich von 64 - 70 %, aufweist.

Weiterhin wird die vorstehende Aufgabe gelöst durch eine Verwendung mit den Merkmalen des Anspruches 20.

Vorteilhafte Ausgestaltungen und zweckmäßige Weiterbildungen der Erfindung sind Gegenstand der Unteransprüche.

Es wurde überaschenderweise gefunden, dass in der erhaltenen Lösung und/oder dem erhaltenen Reaktionsprodukt und/oder dem erhaltenen Nebenprodukt online kontinuierlich zumindest der Gehalt und/oder die Konzentration des mindestens einen metallischen Inhaltsstoffs Aluminium und/oder eines aus dem flüssigen Medium stammenden Cl-Ions oder Cl-Moleküls mittels Nahinfrarot-Analytik, insbesondere Nahinfrarotspektroskopie-Analytik (NIR), ermittelt und auf Basis der ermittelten sowie zeitnah an ein mathematisches Regelmodell übermittelten Nahinfrarot-Messwerte, insbesondere Nahinfrarotspektroskopie-Messwerte, der mittels des Regelmodells beeinflussbare hydrometallurgische Aufbereitungsprozess oder der nasschemische Reaktionsprozess online gesteuert und/oder geregelt werden kann.

Insbesondere kann in der Lösung und/oder einer Waschlösung und/oder einem Lösungsmittel und/oder einem Reaktionsgemisch und/oder dem Nebenprodukt der Gehalt und/oder die Konzentration mindestens eines Ions oder Moleküls des mindestens einen gelösten metallischen Inhaltsstoffs Aluminium und/oder mindestens eines Cl-Ions oder Cl-Moleküls des Lösungsmittels, insbesondere von Cl-Ion oder Cl-haltigen Molekülen und Al-Ion oder Al-haltigen Molekülen, online kontinuierlich mittels der Nahinfrarotspektroskopie-Analytik (NIR) ermittelt und auf Basis der ermittelten NIR-Messwerte das jeweilige Verfahren mit verbesserter Genauigkeit mittels des mathematischen Regelmodells gesteuert und geregelt werden.

Auf Basis der ermittelten Nahinfrarotspektroskopie-Messwerte kann der Zufluss von Lösungsmittel in die Lösungsstufe oder die Reaktionsstufe und/oder von Waschlösung in die Lösungsstufe und/oder von Waschflüssigkeit in die Waschstufe online kontinuierlich mittels des mathematischen Regelmodells und der ihm zeitnah zugeführten Nahinfrarot-Messwerte, insbesondere Nahinfrarotspektroskopie-Messwerte, gesteuert oder geregelt werden. Dies ermöglicht eine genaue und wirtschaftliche Prozessführung sowie eine gute Reproduzierbarkeit und eine genaue Einstellung der Zusammensetzung der erhaltenen Verbindung, insbesondere der Verbindung der Formel AlₙCl₍₃ₙ₋ₘ₎(OH)ₘ, wobei m und n jeweils eine natürliche Zahl sind.

Mit Hilfe Nahinfrarotspektroskopie-Analytik wird/werden insbesondere der Gehalt und/oder die Konzentration des mindestens einen gelösten Inhaltsstoffs, insbesondere des mindestens eines Ions oder Moleküls desselben, und/oder mindestens eines Ions oder Moleküls des Lösungsmittels vor, während und nach dem Einsatz online kontinuierlich ermittelt. Anhand der erhaltenen Messwerte kann mittels des mathematischen Regelmodells das produktionstechnische Verfahren gesteuert und/oder geregelt werden und somit eine effiziente und wirtschaftliche Prozessführung sowie eine gute Reproduzierbarkeit und eine genaue Einstellung der Zusammensetzung der erhaltenen Neben- und Endprodukte, insbesondere der Verbindung mit der Formel AlₙCl₍₃ₙ₋ₘ₎(OH)ₘ, erreicht werden. Die kontinuierliche Nahinfrarot-Analytik ermöglicht die Ermittlung des Gehalts und/oder der Konzentration des mindestens einen Al-Ions oder Al-Moleküls des mindestens einen gelösten Inhaltsstoffs Aluminium und/oder mindestens eines Cl-Ions oder Cl-Moleküls des Lösungsmittels, insbesondere der Bestimmung der Cl- und/oder Al-Ionen Konzentrationen, innerhalb kürzester Zeit und somit eine zeitnahe Einflussnahme auf das Verfahren ohne eine Probe zu entnehmen und eine zeitaufwendige offline Analyse, wie einer Titration, durchzuführen. Die Zeitabstände der einzelnen aufeinander folgenden Messungen der Nahinfrarot-Analytik, insbesondere der Nahinfrarotspektroskopie-Analytik, liegen zwischen 0,1 s und 30 s, insbesondere 0,5 und 15 s, bevorzugt zwischen 1 s und 10 s. Die Abweichung des mittels Nahinfrarot-Analytik ermittelten Wertes von der tatsächlichen Konzentration liegt im Konzentrationsbereich von 5 bis 15 % (Gewichts-Anteil de gelösten Stoffes an der Lösung) unter 0,05 % absolut, so dass die von der NORM 883 maximal zugelassene Abweichung von +/-3 % relative Abweichung im Produkt zu den Herstellerangaben nicht überschritten wird. Diese Genauigkeit erlaubt ebenfalls eine genaue Aufarbeitung der in der produktionstechnischen Herstellung eingesetzten Prozessmedien, so dass eine eine hohe Produktqualität und ein stabiler Prozess ermöglicht werden. Somit kann auf anschließende Reinigungsprozesse verzichtet und damit verbundene Kosten eingespart werden.

Die Erfindung betrifft daher in einem ersten Aspekt ein Verfahren zur produktionstechnischen hydrometallurgischen Aufbereitung oder zur produktionstechnischen nasschemischen Umsetzung eines festen Ausgangsstoffes aus der Gruppe Si-Al-Komplex, Aluminiumhydroxid, Aluminiumchlorid oder Bauxit zu einem chemischen Reaktionsprodukt und/oder einem prozesstechnischen Nebenprodukt, wobei der feste Ausgangsstoff hydrometallurgisch und/oder nasschemisch mit einem flüssigen, Cl-Ionen haltigen, wässrigen, Medium zur Reaktion gebracht und das chemische Reaktionsprodukt und/oder das Nebenprodukt in Form einer Lösung erhalten wird, welche Lösung mindestens den im festen Ausgangsstoff enthaltenen metallischen Inhaltsstoff Aluminium enthält, wobei in der erhaltenen Lösung und/oder dem erhaltenen Reaktionsprodukt und/oder dem erhaltenen Nebenprodukt online kontinuierlich zumindest der Gehalt und/oder die Konzentration des mindestens einen metallischen, Inhaltsstoffs Aluminium und/oder eines aus dem flüssigen Medium stammenden Cl-Ions oder Cl-Moleküls mittels Nahinfrarot-Analytik, insbesondere Nahinfrarotspektroskopie-Analytik (NIR), ermittelt und auf Basis der ermittelten sowie zeitnah an ein mathematisches Regelmodell übermittelten Nahinfrarot-Messwerte, insbesondere Nahinfrarotspektroskopie-Messwerte, der mittels des Regelmodells beeinflussbare hydrometallurgische Aufbereitungsprozess oder der nasschemische Reaktionsprozess online gesteuert und/oder geregelt wird.

In einem zweiten Aspekt betrifft die Erfindung ein Verfahren zur Produktion von Polyaluminiumchloridhydroxid (PAC) durch hydrometallurgisches Lösen von Aluminium in Polyaluminiumchloridhydroxid (PAC), wobei die Zusammensetzung eines Beizmediums und/oder anderer aluminium- und/oder chlorid-haltiger Prozessmedien kontinuierlich, insbesondere online, mittels Nahinfrarot-Analytik, insbesondere Nahinfrarotspektroskopie-Analytik (NIR), gemessen werden und die Analysenergebnisse dazu zeitnah erhalten sowie dazu verwendet werden, den Prozess mittels des mathematischen Regelmodells zu steuern.

Weiterhin betrifft die Erfindung nach einem dritten Aspekt ein Verfahren zur produktionstechnischen Herstellung einer Verbindung der Formel AlₙCl₍₃ₙ₋ₘ₎(OH)ₘ in dem wässrigen Medium oder mittels des wässrigen Mediums, wobei n und m jeweils eine natürliche Zahl sind und das Verfahren die Herstellung und/oder Verwendung mindestens einer Cl- und/oder Al-Ionen haltigen Lösung und/oder mindestens eines Cl- und/oder Al-Ionen haltigen Lösungsmittels und/oder mindestens eines Cl-und/oder Al-Ionen haltigen wässrigen Mediums, insbesondere des Reaktionsproduktes und/oder des Nebenproduktes, umfasst, wobei mittels der Nahinfrarot-Analytik, insbesondere der Nahinfrarotspektroskopie-Analytik (NIR), die Konzentration der Cl-und/oder Al- Ionen der mindestens einen Lösung und/oder des mindestens einen Lösungsmittels und/oder des mindestens einen wässrigen Mediums, insbesondere des Reaktionsproduktes und/oder des Nebenproduktes, online kontinuierlich ermittelt werden und die dadurch erhaltenen Messwerte das Verfahren oder den Prozess online mittels des mathematischen Regelmodells steuern.

Schließlich betrifft die Erfindung nach einem vierten Aspekt die Verwendung von Nahinfrarot - Analytik, insbesondere Nahinfrarotspektroskopie-Analytik, zur kontinuierlichen Online-Verfahrens- oder Prozesssteuerung eines Verfahrens nach einem oder mehreren der Ansprüche 1 - 19 zur Herstellung einer Verbindung der Formel AlₙCl₍₃ₙ₋ₘ₎(OH)ₘ in Form einer wässrigen Lösung auf Basis der mittels der Nahinfrarot - Analytik, insbesondere der Nahinfrarotspektroskopie-Analytik, für die wässrige Lösung ermittelten Nahinfrarot-Messwerte, insbesondere Nahinfrarotspektroskopie-Messwerte, für den Gehalt an Al-Ionen und/oder Cl-Ionen in der wässrigen Lösung.

In Ausgestaltung betrifft die Erfindung ein Verfahren zur produktionstechnischen hydrometallurgischen Aufbereitung des festen Ausgangsstoffes zu einem Endprodukt und dem Nebenprodukt durch hydrometallurgisches Lösen und/oder chemische Reaktion des im Ausgangsstoff enthaltenen metallischen Inhaltsstoffes Aluminium mittels des Cl-Ionen haltigen wässrigen Mediums in einem eine Reaktionsstufe und eine Waschstufe umfassenden Aufbereitungsprozess, welcher die Zuführung des Ausgangstoffes zu der Reaktionsstufe umfasst, in welcher der Ausgangsstoff dem Einfluss eines oder des flüssigen Lösungsmittels unterworfen und unter Überführung seines metallischen Inhaltsstoffs Aluminium in die erhaltene Lösung und/oder das Nebenprodukt zu einem Silizium-Zwischenprodukt hydrometallurgisch aufbereitet wird, wonach das in der Reaktionsstufe erhaltene Silizium-Zwischenprodukt der Waschstufe zugeführt und in der Waschstufe dem Einfluss einer Waschflüssigkeit unterworfen wird sowie dort eine sich dabei bildende und den mittels der Waschflüssigkeit vom Zwischenprodukt abgespülten metallischen Inhaltsstoff Aluminium sowie die Waschflüssigkeit enthaltende Waschlösung und das aufbereitete Endprodukt gebildet werden, wonach das aufbereitete Endprodukt aus der Waschstufe abgeführt wird, wobei bei der Aufbereitung in der Lösung und/oder der Waschlösung und/oder dem Lösungsmittel und/oder dem Nebenprodukt der Gehalt und/oder die Konzentration an aus dem gelösten Inhaltsstoff Aluminium stammender Al-Ionen oder Al-Moleküle und/oder an aus dem Lösungsmittel stammender Cl- Ionen und/oder Cl-Moleküle oder Cl- und Al-Ionen und/oder Cl-Moleküle und Al-Moleküle online kontinuierlich mittels der Nahinfrarot - Analytik, insbesondere der Nahinfrarotspektroskopie-Analytik (NIR), ermittelt und auf Basis der ermittelten Nahinfrarot-Messwerte, insbesondere Nahinfrarotspektroskopie-Messwerte, der Zufluss von Lösungsmittel in die Reaktionsstufe oder eine Prozeßstufe und/oder von Waschlösung in die Reaktionsstufe und/oder von Waschflüssigkeit in die Waschstufe online auf Basis des mathematischen Regelmodells gesteuert oder geregelt wird/werden.

In Ausgestaltung betrifft die Erfindung weiterhin ein Verfahren zur produktionstechnischen Herstellung des Reaktionsproduktes und/oder des Nebenproduktes mittels des Cl-Ionen haltigen wässrigen Mediums durch chemische Reaktion des festen Ausgangsstoffes mit dem oder einem chlorid-haltigen oder aluminium- und chlorid-haltigen flüssigen Lösungsmittel in einem mindestens eine Reaktionsstufe umfassenden Reaktionsprozess, wobei in der Reaktionsstufe der feste Ausgangsstoff und das flüssige Lösungsmittel miteinander in Kontakt und unter Bildung des Reaktionsproduktes und/oder des Nebenproduktes zur Reaktion gebracht werden und das erhaltene Reaktionsprodukt und/oder Nebenprodukt aus der Reaktionsstufe abgeführt wird/werden, wobei bei der Herstellung des Reaktionsproduktes und/oder des Nebenproduktes in dem Lösungsmittel und/oder dem Nebenprodukt und/oder dem Reaktionsprodukt der Gehalt und/oder die Konzentration an aus dem gelösten metallischen Inhaltsstoff Aluminium stammenden Al-Ionen oder Al-Molekülen und/oder mindestens eines aus dem Lösungsmittel stammenden Cl-Ions oder Cl-Moleküls online kontinuierlich mittels der Nahinfrarot - Analytik, insbesondere der Nahinfrarotspektroskopie-Analytik (NIR), ermittelt und auf Basis der ermittelten Nahinfrarot-Messwerte, insbesondere Nahinfrarotspektroskopie-Messwerte, der Zufluss von Lösungsmittel in die Reaktionsstufe online auf Basis des mathematischen Regelmodells gesteuert oder geregelt wird/werden.

In Ausgestaltung sieht die Erfindung vor, dass auf Basis der ermittelten Nahinfrarot-Messwerte, insbesondere Nahinfrarotspektroskopie-Messwerte, der Gehalt und/oder die Konzentration an Al-Ionen oder Al-Molekülen und der Gehalt und/oder die Konzentration an Cl-Ionen oder Cl-Molekülen einer Lösungschemikalie und/oder des die chemische Reaktion in der Reaktionsstufe bewirkenden Reaktionsgemischs oder des Cl-Ionen haltigen wässrigen Mediums in der Lösung und/oder dem Cl-Ionen haltigen wässrigen Medium und/oder dem Reaktionsprodukt und/oder dem Nebenprodukt eingestellt wird/werden.

Von Vorteil ist es gemäß Weiterbildung der Erfindung weiterhin, wenn der Reaktionsstufe eine Waschlösung zugeführt und ein oder das ein Beizmedium ausbildende Lösungsmittel aus der Lösungschemikalie und der Waschlösung gebildet wird.

Zweckmäßig ist es weiterhin, wenn in der Reaktionsstufe die Lösung und das Nebenprodukt in Form einer Al-haltigen wässrige Flüssigkeit als Polyaluminiumchloridhydroxid (PAC) erhalten und aus der Reaktionsstufe abgeführt wird/werden, was die Erfindung ebenfalls vorsieht.

Von besonderem Vorteil ist die Prozesssteuerung und/oder Prozessregelung mittels eines mathematischen Regelmodells. Die Erfindung zeichnet sich daher in Weiterbildung dadurch aus, dass die Zusammensetzung des in der Reaktionsstufe gebildeten Lösungsmittels, insbesondere des Beizmediums, sowie der Al- und/oder Cl-Ionen haltigen Verfahrens- und Prozessmedien der Gruppe aus Waschlösung, Cl-Ionen haltigem wässrigem Medium, Nebenprodukt und Lösung kontinuierlich online mittels der Nahinfrarot - Analytik, insbesondere Nahinfrarotspektroskopie-Analytik, gemessen und ermittelt werden sowie dem die Aufbereitungs- und Reaktionsschritte des jeweiligen Produktionsprozesses abbildenden und das Verfahren zur produktionstechnischen Aufbereitung des festen Ausgangsstoffes und zur produktionstechnischen Herstellung des Reaktions- und/oder Nebenprodukts steuernden mathematischen Regelmodell zugeführt werden.

Insbesondere lässt sich das erfindungsgemäße Verfahren bei der Herstellung von Polyaluminiumchloridhydroxid mit einem kaskadierten Auflöse- und Waschprozess zur Reinigung von Silizium von einem Silizium-Aluminium-Komplex verwenden, so dass die Erfindung weiterhin vorsieht, dass der Ausgangsstoff ein Silizium(Si)-haltiges Material, insbesondere ein Si-Al-Komplex, ist oder umfasst, die Lösungschemikalie eine Lauge oder eine Säure, insbesondere HCl, HF, H₂SO₄ oder eine Mischung der vorgenannten ist oder umfasst, die Waschflüssigkeit Wasser ist oder umfasst sowie die Lösung, das Reaktionsprodukt und das Nebenprodukt Polyaluminiumchloridhydroxid (PAC) als Al- und Cl-haltige wässrige Flüssigkeitist/sind oder umfasst/umfassen und das Zwischenprodukt und/oder das Endprodukt Si ist oder umfasst.

Bei dem erfindungsgemäßen Verfahren kann es sich insbesondere um die Aufbereitung silizium- und/oder aluminiumhaltiger fester Ausgangsstoffe handeln, die mittels Salzsäure aufbereitet werden. Eine Weiterbildung der Erfindung zeichnet sich daher weiterhin dadurch aus, dass der metallische Inhaltsstoff des Ausgangsstoffes ein Al-Ion oder Al-haltiges Molekül und das mindestens eine Ion oder Molekül des Lösungsmittels und/oder der Lösungschemikalie ein Cl-Ion oder Cl-haltiges Molekül ist/sind oder umfasst/umfassen und dass das Verfahren das hydrometallurgische Lösen von Aluminium (Al) aus eine Al-enthaltenden Verbindung umfasst.

Als Ziel derartiger Verfahren soll insbesondere eine hohe Konzentration eines metallischen Inhaltsstoffes in einer insbesondere als Nebenprodukt eines Verfahrens gewonnenen wässrigen Lösung eingestellt werden. Diesbezüglich sieht die Erfindung in Weiterbildung daher vor, dass in der als Reaktionsprodukt oder Nebenprodukt gewonnenen Lösung mittels einer Online - Regelung oder Online - Steuerung mittels des mathematischen Regelmodells ein möglichst hoher Gehalt Al - Gehalt und ein möglichst geringes Cl/Al - Verhältnis eingestellt werden.

Um insbesondere zweckmäßige und bei Bildung von Polyaluminiumchloridhydroxid ausreichende Aluminiumgehalte einstellen zu können, sieht die Erfindung in weiterer Ausgestaltung vor, dass das wässrige Polyaluminiumchloridhydroxid (PAC) als Reaktionsprodukt oder Nebenprodukt in Form einer Polyaluminiumchloridhydroxidlösung gewonnen und der Aufbereitungsprozess oder der Reaktionsprozess mittels der Nahinfrarot-Analytik, insbesondere Nahinfrarotspektroskopie-Analytik, online derart geregelt und gesteuert wird, dass in der Polyaluminiumchloridhydroxidlösung ein Massenanteil an Aluminium zwischen 42 und 124 g Al/kg Polyaluminiumchloridhydroxid (PAC) eingestellt wird.

Insbesondere lässt sich das erfindungsgemäße Verfahren bei der Aufbereitung von Silizium-Rohmaterial anwenden. Die Erfindung sieht daher auch vor, dass als Ausgangsstoff Si-Rohmaterial, insbesondere im Elektrolichtbogenofen erschmolzenes Si-Rohmaterial, zu Reinsilizium als Endprodukt aufbereitet wird oder der Ausgangsstoff Aluminiumhydroxid (Al(OH)₃) ist, das mit Salzsäure (HCl) zur Reaktion gebracht wird.

Das gewonnene Polyaluminiumchloridhydroxid lässt sich insbesondere in Form der Summenformel AlCl₃₋ₘ(OH)ₘ darstellen, wobei m eine positive reelle Zahl zwischen 0 und 3 ist.

Die das Polyaluminiumchloridhydroxid bildende oder enthaltende wässrige Lösung kann auch durch die Kombination zweier Substrate und deren chemischer Reaktion hergestellt werden. Diesbezüglich sieht die Erfindung in weiterer Ausgestaltung vor, dass das hergestellte Reaktionsprodukt oder Nebenprodukt Polyaluminiumchloridhydroxid (PAC) der Formel AlCl₃₋ₘ(OH)ₘ ist, wobei m eine positive reelle Zahl zwischen 0 und 3 darstellt.

Für die Anwendung der NIR-Analytik eignen sich insbesondere bestimmte Wellenzahlen. Die Erfindung sieht daher in Weiterbildung vor, dass die Nahinfrarot-Analytik, insbesondere Nahinfrarotspektroskopie-Analytik, das Lösungsmittel und/oder die Waschlösung und/oder die Lösung und/oder das Reaktionsprodukt und/oder das Nebenprodukt mit einer Wellenzahl der NIR-Strahlung zwischen 4.000 cm⁻¹ und 7.500 cm⁻¹, insbesondere mit einer Wellenzahl der NIR-Strahlung zwischen 4.300 cm⁻¹ und 4.800cm⁻¹ sowie 5.300 cm⁻¹ und 6.500 cm⁻¹ durchstrahlt und das erhaltene Absorptionsspektrum misst.

Für die Durchführung der Messungen mittels der Nahinfrarot-Analytik, insbesondere der Nahinfrarotspektroskopie-Analytik, ist es von Vorteil, wenn die Messung mittels der Nahinfrarot-Analytik, insbesondere der Nahinfrarotspektroskopie-Analytik, an mindestens einem Messpunkt vorgenommen wird, der innerhalb eines Behälters oder eines Reaktors oder einer Verbindungsleitung angeordnet ist, welche(r) das Lösungsmittel und/oder die Waschlösung und/oder die Lösung und/oder das Reaktionsprodukt und/oder das Nebenprodukt aufnimmt oder führt.

Hierbei ergibt sich schließlich ein besonderer Vorteil dann, wenn der Messpunkt druckseitig stromabwärts einer dem Behälter und/oder dem Reaktor und/oder der Verbindungsleitung zugeordneten Umwälzpumpe angeordnet ist, was die Erfindung auch vorsieht.

Die Verwendung zeichnet sich in vorteilhafter Ausgestaltung dadurch aus, dass Polyaluminiumchloridhydroxid (PAC) in Form der wässrigen Lösung der Formel AlₙCl₍₃ₙ₋ₘ₎(OH)ₘ als Reaktionsprodukt und/oder Nebenprodukt hergestellt und deren/dessen jeweiliger Gehalt oder jeweilige Konzentration an Cl-Ionen und/oder Al-Ionen mittels der Nahinfrarot-Analytik, insbesondere der Nahinfrarotspektroskopie-Analytik, gemessen und ermittelt werden sowie die erhaltenen Messwerte einem in einer das Verfahren nach einem oder mehreren der Ansprüche 1 - 20 oder den jeweiligen produktionstechnischen Aufbereitungs- oder Reaktionsprozess kontinuierlich steuernden und/oder regelnden Einrichtung hinterlegten mathematischen Prozess- und/oder Regelmodel zugeführt werden.

Die Erfindung ist nachstehend anhand der einzigen Figur beispielhaft näher erläutert.

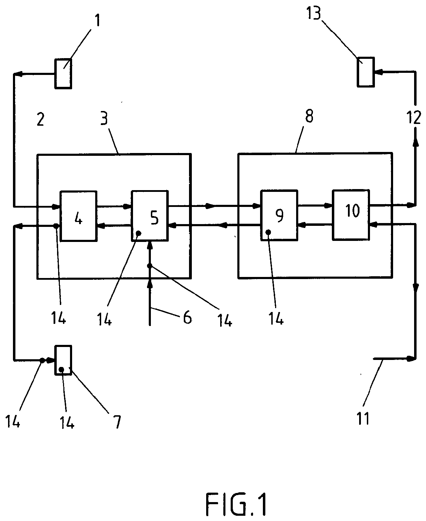

Figur 1 zeigt ein allgemeines Flussdiagramm zur produktionstechnischen Aufbereitung eines (ersten) festen Ausgangsstoffs 1 zu einem Endprodukt 13, beispielsweise einen Prozess zur Gewinnung und Raffination von Si als Endprodukt 13 aus einer Si-und Al-haltigen Verbindung. Hierbei wird beispielsweise Polyaluminiumchloridhydroxid (PAC) als wirtschaftlich lukratives Nebenprodukt 7 erhalten und aus dem Prozess abgeführt.

Optional kann der feste Ausgangsstoff 1 vor dem Erreichen der Lösungs- bzw. Reaktionsstufe 3 in einem Vorbereitungsschritt 2 vorbereitet werden, in dem der Ausgangsstoff 1 beispielsweise mit einer Waschlösung gewaschen wird. Die etwaig eingesetzten Chemikalien können vom Fachmann ohne weiteres dem Zweck des Vorbereitungsschritts 2 angepasst werden. Die Lösungs-/Reaktionsstufe 3 weist je nach Bedarf optional mehrere Prozessstufen, im Ausführungsbeispiel die Prozessstufen 4 und 5, auf. In einer bevorzugten Ausführungsform ist der feste Ausgangsstoff 1 eine Si- und Al-haltige Verbindung, insbesondere ein Si-Al-Komplex. Die Si-und Al-haltige Verbindung kann hierbei in jeglicher Form vorliegen, beispielsweise in schüttbarer Form. Si- und Al-haltige Verbindung nach der Erfindung sind alle dem Fachmann bekannten Verbindungen, die Al und Si umfassen. Si- und Al-enthaltende Verbindungen sind, ohne auf diese beschränkt zu sein, Si- und Al-enthaltende Kristalle und Legierungen sowie Si-Al-Komplexe. In einer weiter bevorzugten Ausführungsform ist Si-Rohmaterial, insbesondere im Elektrolichtbogenofen erschmolzenes Si-Rohmaterial, der feste Ausgangsstoff 1, der zu Rein-Si als Endprodukt 13 aufbereitet wird.

Bei dem Ausführungsbeispiel nach der Fig. 1 wird analog zu der aus der WO 2011/127603 A1 bekannten Vorgehensweise bei einem kaskadierten Auflöse- und Waschprozess zur Reinigung von Silizium in einem Si-Al-Komplex ein solcher Si-Al-Komplex als (erster) fester Ausgangsstoff 1 der Lösungs-/Reaktionsstufe 3 zugeführt, wo aus diesem ein Silizium-Zwischenprodukt hergestellt wird, welches dann einer Waschstufe 8 zugeführt und zu einem Silizium-Endprodukt 13 aufbereitet wird, das die Waschstufe 8 verlässt und danach nur noch eine Trocknungsstufe 12 durchläuft. Dem (ersten) festen Ausgangsstoff 1 strömt in der Lösungs-/Reaktionsstufe 3 ein flüssiges Lösungsmittel, das mit Hilfe einer Lösungschemikalie 6, wobei es sich insbesondere um Salzsäure handelt, gebildet wird, entgegen. In den beiden Prozessstufen 4 und 5 wird der feste Ausgangsstoff 1 jeweils mit diesem Lösungsmittel oder einer daraus gebildeten Lösung hydrometallurgisch im Gegenstromverfahren behandelt. Bei der sich die dabei bildenden wässrigen Lösung handelt es sich um Polyaluminiumchloridhydroxid (PAC), das in den beiden Prozessstufen 4 und 5 der Lösungs-/Reaktionsstufe 3 gebildet wird und das als Nebenprodukt 7 aus der Lösungs-/Reaktionsstufe 3 abgeführt wird. In die Prozessstufe 5 wird zur Bildung der dortigen wässrigen Lösung eine aus der Waschstufe 8 stammende Waschlösung überführt. In der Waschstufe 8 wird der in der Lösungs-/Reaktionsstufe 3 bereits zu einem Zwischenprodukt - hier Silizium - aufbereitete (erste) feste Ausgangsstoff 1 im Gegenstrom dem Einfluss einer zugeführten Waschflüssigkeit 11 und einer in den beiden Prozessstufen 9 und 10 der Waschstufe 8 gebildeten Waschflüssigkeit ausgesetzt. In der Waschstufe 8 werden von dem Silizium-Zwischenprodukt, nachdem in der Lösungs-/Reaktionsstufe 3 bereits der größte und wesentliche Teil des metallischen Inhaltsstoffes Aluminium des festen Ausgangsstoffes 1 aus dem Si-Al-Komplex herausgelöst und vom Silizium getrennt worden ist, ein verbleibender Rest an gelöstem Aluminium und insbesondere aber Reste des Lösungsmittels oder der in der Lösungs-/Reaktionsstufe 3 gebildeten Lösung von dem Silizium-Zwischenprodukt abgewaschen. Auch hier durchströmen die Waschflüssigkeit und die daraus gebildete Waschlösung sowie das Silizium-Zwischenprodukt die Waschstufe 8 im Gegenstrom.

Insgesamt handelt es sich hierbei um ein Verfahren zur produktionstechnischen, hydrometallurgischen Aufbereitung des (ersten) festen Ausgangsstoffes 1 zu dem Endprodukt 13 und dem Nebenprodukt 7 durch hydrometallurgisches Lösen und/oder nasschemische Reaktion mindestens eines metallischen Inhaltsstoffes (Aluminium) des festen Ausgangsstoffes 1 in einem die Lösungs-/Reaktionsstufe 3 und die Waschstufe 8 umfassenden Produktionsprozess. Der feste Ausgangsstoff 1 (Si-Al-Komplex) wird der Lösungs-/Reaktionsstufe 3 zugeführt und hier dem Einfluss eines flüssigen Lösungsmittels unterworfen sowie unter Überführung des mindestens einen metallischen Inhaltsstoffes (Aluminium) des festen Ausgangsstoffes 1 in eine erhaltene Lösung und das Nebenprodukt 7 zu einem (Silizium-)Zwischenprodukt hydrometallurgisch aufbereitet. Danach wird das in der Lösungs-/Reaktionsstufe 3 erhaltene (Silizium-)Zwischenprodukt der Waschstufe 8 zugeführt und hier dem Einfluss der Waschflüssigkeit 11 unterworfen. Hierbei werden in der Waschstufe 8 eine Waschlösung, die ggf. den mittels der Waschflüssigkeit 11 in der Prozessstufe 10 noch vom (Silizium-)Zwischenprodukt abgespülten mindestens einen metallischen Inhaltsstoff (Aluminium) sowie die Waschflüssigkeit 11 enthält, und das aufbereitete Endprodukt 13 gebildet, welches dann aus der Waschstufe 8 abgeführt und gegebenenfalls der Trocknungsstufe 12 zugeführt wird.

Um diesen Produktionsprozess insbesondere in der Lösungs-/Reaktionsstufe 3 in Bezug auf die insbesondere im Endprodukt 7 einzustellenden Konzentrationen an Aluminium, das heißt den mindestens einen metallischen Inhaltsstoff, und an über die Lösungschemikalie 6 oder ein dadurch gebildetes Lösungsmittel zugeführten Ionen, hier Cl-Ionen der Salzsäure HCl, einstellen zu können, werden die in der Lösungs-/Reaktionsstufe 3 und/oder der Waschstufe 8, vorzugsweise aber die in der Lösungs-/Reaktionsstufe 3 geführten und/oder gebildeten wässrigen Lösungen und Medien, Lösungsmittel, Waschlösungen, Polyaluminiumchloridhydroxid-Lösungen zumindest teilweise und insbesondere das als wässrige Lösung erhaltene Reaktions-und/oder Nebenprodukt 7 Polyaluminiumchloridhydroxid (PAC) mittels Nahinfrarot-Analytik, insbesondere Nahinfrarotspektroskopie-Analytik, gemessen und Nahinfrarot-Messwerte, insbesondere Nahinfrarotspektroskopie-Messwerte ermittelt. Hierzu sind in der Fig. 1 beispielshaft Messstellen oder Messpunkte 14 eingezeichnet, mittels welcher jeweils online kontinuierlich während des laufenden Produktionsprozesses die gewünschten Inhaltsstoffe der an dem jeweiligen Messpunkt 14 befindlichen oder vorbeigeführten Flüssigkeit(en) mittels Nahinfrarotspektroskopie analysiert und gemessen werden. Die jeweils gemessenen und ermittelten Nahinfrarot-Messwerte oder Nahinfrarotspektroskopie-Messwerte werden dann zeitnah und online einer den Produktionsprozess steuernden, nicht dargestellten Einrichtung, zugeführt. In dieser Einrichtung ist ein den Produktionsprozess abbildendes, steuerndes und/oder regelndes mathematisches Prozess- und/oder Regelmodell hinterlegt. In diesem mathematischen Prozess- und/oder Regelmodell werden die gemessenen oder ermittelten NIR-Messwerte oder NIR-Analysewerte verarbeitet und der Steuerung und Regelung des Produktionsprozesses zugrundegelegt.

Bei dem hier beschriebenen Ausführungsbeispiel werden insbesondere die Al-Ionen-und/oder die Cl-Ionengehalte und -Konzentrationen in den jeweiligen Flüssigkeiten ermittelt und wird der Produktionsprozess insbesondere derart gesteuert, dass in dem gewonnene Reaktions- und/oder Nebenprodukt 7 ein möglichst günstiges Al/Cl-Verhältnis eingestellt wird, d.h. ein Polyaluminiumchloridhydroxid (PAC) erhalten wird, das durch ein möglichst kleines Verhältnis des mindestens einen Ions oder Moleküls des Lösungsmittels und/oder der Lösungschemikalie 6 - hier dem Cl-Ion - zu dem mindestens einen Ion oder Molekül des mindestens einen metallischen Inhaltsstoffes - hier dem Al-Ion - eingestellt wird, d.h. es soll ein möglichst geringes Cl/Al-Verhältnis eingestellt werden, um ein möglichst gut weiterverarbeitbares oder wiederverwendbares PAC als Reaktionsprodukt und/oder Nebenprodukt 7 zu erhalten.

In nicht dargestellter Weise kann das erfindungsgemäße Verfahren auch bei der Herstellung von Polyaluminiumchloridhydroxid (PAC) als Nebenprodukt 7 oder Reaktionsprodukt Verwendung finden, bei welchem das PAC durch chemische Reaktion eines zweiten, den mindestens einen metallischen Inhaltsstoff enthaltenden festen Ausgangsstoffs, beispielsweise Aluminiumhydroxid, mit einem flüssigen Lösungsmittel, beispielsweise Salzsäure, in einem mindestens eine Reaktionsstufe umfassenden Produktionsprozess hergestellt wird. In der Reaktionsstufe werden der zweite feste Ausgangsstoff und das flüssige Lösungsmittel miteinander in Kontakt und unter Bildung des Reaktionsproduktes und/oder Nebenproduktes 7 Polyaluminiumchloridhydroxid (PAC) zur Reaktion gebracht, wonach das erhaltene PAC aus der Reaktionsstufe abgeführt wird.

PAC ist eine Verbindung der nachstehenden Formel (I) AlₙCl₍₃ₙ₋ₘ₎(OH)ₘ, wobei m und n jeweils eine natürliche Zahl ist, welche "Polyaluminiumchloridhydroxid" oder auch "Polyaluminiumchlorid" genannt und mit "PAC" abgekürzt wird. Das erfindungsgemäße Verfahren kann kontinuierlich aber auch batch-weise erfolgen. Das Verfahren kann vom Fachmann ohne weiteres so ausgestaltet werden, dass das erhaltene PAC die Zusammensetzung und insbesondere die Basizität aufweist, die gewünscht ist. So kann das PAC die gleiche Anzahl an Cl- und OH-Ionen aufweisen. Das PAC kann auch eine höhere Anzahl Cl- als OH-Ionen aufweisen. Beispielsweise kann das molare Verhältnis von Cl- zu OH-Ionen 60 zu 40, 70 zu 30, 80 zu 20, 90 zu 10 oder 99 zu 1 sein. Das PAC kann auch eine höhere Anzahl OH- als Cl-Ionen aufweisen. Beispielsweise kann das molare Verhältnis von OH- zu Cl-Ionen 60 zu 40, 70 zu 30, 80 zu 20, 90 zu 10 oder 99 zu 1 sein. In einer Ausführungsform des Verfahrens wird in der als Nebenprodukt 7 gewonnenen Lösung mittels der Online - Regelung oder Online - Steuerung ein möglichst hoher Gehalt an dem mindestens einen Ion oder Molekül des mindestens einen Inhaltsstoffs, insbesondere Al - Gehalt, und ein möglichst geringes Verhältnis des mindestens einen Ions oder Moleküls des Lösungsmittels und/oder der Lösungschemikalie 6 zu dem mindestens einen Ion oder Molekül des mindestens einen metallischen Inhaltsstoffs, insbesondere Cl/Al - Verhältnis, eingestellt. In einer anderen bevorzugten Ausführungsform wird das wässrige Polyaluminiumchlorid (PAC) als Nebenprodukt 7 gewonnen und das Verfahren mittels der Nahinfrarotspektroskopie-Analytik online derart geregelt und gesteuert, dass in der Polyaluminiumchloridhydroxidlösung ein Massenanteil an Aluminium zwischen 42 und 124 g Al/kg PAC eingestellt wird. Vorzugsweise weist das erhaltene PAC eine hohe Al-Ionen-Konzentration und eine möglichst hohe Basizität im Bereich 30 - 90 %, bevorzugt 64 - 70 %, auf. Je nach Einsatz des Lösungsmittels und/oder der Lösungschemikalie 6 und/oder des gewünschten PACs kann der Fachmann die üblichen Bedingungen anpassen, wie beispielsweise die Reaktions- bzw. Lösungstemperatur und -dauer.

Die erfindungsgemäße Aufbereitung oder Herstellung wird durch Lösen oder Reaktion mindestens eines Inhaltsstoffes des ersten festen Ausgangsstoffes 1 oder Reaktion des mindestens zweiten Ausgangsstoffs mit dem flüssigen Lösungsmittel in einem eine Lösungs-/Reaktionsstufe 3 und Waschstufe 8 oder einem eine Reaktionsstufe 3 umfassenden Produktionsprozess erreicht. Der Produktionsprozess umfasst die Zuführung des ersten festen Ausgangstoffes 1 zu der Lösungs-Reaktionsstufe 3 oder des zweiten Ausgangsstoffs und des Lösungsmittels zu der Reaktionsstufe 3. In der Lösungs-/Reaktionsstufe 3 wird der erste Ausgangsstoff 1 und in der Reaktionsstufe wird der zweite Ausgangsstoff jeweils dem Einfluss des Lösungsmittels unterworfen und unter Überführung des mindestens einen metallischen Inhaltsstoffs in eine erhaltene Lösung zu einem Zwischenprodukt oder dem PAC aufbereitet. Hierbei kann das Lösen auch ein Beizen sein, insbesondere das Beizen einer Si- und Al-enthaltenden Verbindung bzw. eines Si-Rohmaterials. Hierzu müssen der jeweilige Ausgangsstoff und das Lösungsmittel miteinander in Kontakt gebracht werden. Das In-Kontakt-Bringen umfasst das Sprühen, Benetzen, Eintauchen oder Beschichten des jeweiligen Ausgangsstoffs mit dem Lösungsmittel. Der jeweilige Ausgangsstoff kann auch mit dem Lösungsmittel übergossen werden, so dass der Ausgangsstoff teilweise oder vollständig von dem Lösungsmittel umgeben ist. Ferner kann das so entstandene Reaktionsgemisch gerührt, geschüttelt oder gerüttelt werden. Vorzugsweise ist das Lösungsmittel und/oder die Lösungschemikalie 6 eine Lauge oder eine Säure, insbesondere HCl, HF, H₂SO₄ oder eine Mischung der vorgenannten. Ferner ist die Waschflüssigkeit 11 Wasser, die Lösung eine Al-haltige wässrige Flüssigkeit, insbesondere Polyaluminiumchloridhydroxid (PAC), und das Zwischenprodukt und/oder das Endprodukt 13 ist oder umfasst Si. Um eine gute Durchmischung zu gewährleisten, werden die zu durchmischenden Stoffe, wie Lösungsmittel und die Ausgangsstoffe im Gegenstrom in Kontakt gebracht. Die Zusammensetzung der eingesetzten oder erhaltenen Mittel, wie Waschflüssigkeiten und Reaktionsgemische kann hierbei vom Fachmann so gewählt sein, dass es für den bestimmungsgemäßen Zweck geeignet ist. Das Lösungsmittel weist die Konzentrationen an Al-, Cl- und OH-Ionen auf, die zur Herstellung von PAC als Nebenprodukt geeignet sind. Üblicherweise weist das Lösungsmittel eine Al-Konzentration von 70 bis 85 g pro kg Lösungsmittel und eine Basizität von 60 % bis 70 %, bevorzugt 64 % bis 68 % auf. Die Zusammensetzung der Lösungsmittel wird unter anderem bestimmt durch die Reaktivität des jeweiligen Ausgangstoffs, der Lösedauer, die Anzahl an Lösungsmittelbehälter, über die umgewälzt wird, die Temperatur, die Wasserverdampfung aus den Lösungsmitteln und durch den Absaugvolumenstrom, da dieser über die Reaktivität beziehungsweise über die verstrichene Lösedauer veränderlich ist. Die Zusammensetzungen der eingesetzten Lösungsmittel werden über die Zugabe von Medien im Gegenstrom gesteuert. In einer bevorzugten Ausführungsform der vorliegenden Erfindung wird die Waschlösung der Lösungs-/Reaktionsstufe 3 zugeführt und das vorzugsweise ein Beizmedium ausbildende Lösungsmittel aus einer Lösungschemikalie 6 und der Waschlösung gebildet. Die Zusammensetzung des Lösungsmittels wird durch Zugabe der Lösungschemikalie eingestellt. Das Lösungsmittel wiederum umfasst AlCl₃ und wässrige HCl und wird im Prozessschritt 5 durch die Zugabe von Waschflüssigkeit 11 aus der Waschstufe 8 beeinflusst. Hierbei kann die Zugabe der Waschflüssigkeit 11 über den Pegel im Umwälzbehälter gesteuert werden und die Waschflüssigkeit 11 selbst der erfindungsgemäßen Nahinfrarot-Analytik unterzogen werden. In der Lösungs-/Reaktionsstufe 3 wird Al aus dem ersten Ausgangsstoff 1 herausgelöst und relativ reines Si als Zwischenprodukt erhalten. Vorzugsweise wird die in der Lösungs-/Reaktionsstufe 3 erhaltene Lösung aus der Lösungs-/Reaktionsstufe 3 abgeführt. Das relativ reine Si durchläuft anschließend die Waschstufe 8, die (optional) die beiden Prozessstufen 9 und 10 umfasst. Anschließend wird das erhaltene Si im Trocknungsschritt 12 getrocknet. Die Trocknung kann durch jede dem Fachmann bekannte, geeignete Art und Weise erfolgen. Das Lösungsmittel weist die Konzentrationen an Al-, Cl- und OH-Ionen auf, die zur Herstellung von PAC geeignet sind. Üblicherweise weist das Lösungsmittel eine Al-Konzentration von 70 und 85 g pro kg Lösungsmittel und eine Basizität von 64 % bis 68 % auf. Im Lösungsmittel ist die Konzentration an AlCl₃ und HCl jeweils zwischen 0,1 % und 10 %, bevorzugt jeweils zwischen 3 % und 6 %.

Das in der Lösungs-/Reaktionsstufe 3 erhaltene Zwischenprodukt wird der Waschstufe 8 zugeführt und in der Waschstufe 8 dem Einfluss der Waschflüssigkeit 11 unterworfen sowie eine sich dabei bildende und den mittels der Waschflüssigkeit 11 gegebenenfalls vom Zwischenprodukt abgespülten mindestens einen metallischen Inhaltsstoff sowie die Waschflüssigkeit 11 enthaltende Waschlösung und das aufbereitete Endprodukt 13 werden gebildet.

Anschließend wird das aufbereitete Endprodukt 13 aus der Waschstufe 8 abgeführt und optional dem Trocknungsschritt 12 unterzogen. Die Trocknung kann durch jede dem Fachmann bekannte, geeignete Art und Weise erfolgen.

Das erfindungsgemäße Verfahren zeichnet sich dadurch aus, dass in der Lösung und/oder der Waschlösung und/oder dem Lösungsmittel und/oder dem Reaktionsgemisch und/oder dem Nebenprodukt 7 der Gehalt und/oder die Konzentration mindestens eines Ions oder Moleküls des mindestens einen gelösten Inhaltsstoffs und/oder mindestens eines Ions oder Moleküls des Lösungsmittels online kontinuierlich mittels einer Nahinfrarotspektroskopie-Analytik (NIR) ermittelt wird/werden. Auf Basis der ermittelten Nahinfrarotspektroskopie-Messwerte wird insbesondere der Zufluss von Lösungsmittel und/oder von Waschlösung und/oder Lösungschemikalie 6 in die Lösungs-/Reaktionsstufe 3 und/oder von Waschflüssigkeit in die Waschstufe 8 und/oder des zweiten Ausgangsstoffs und Lösungsmittels in die Reaktionsstufe 3 online gesteuert oder geregelt.

Auf Basis der ermittelten Nahinfrarotspektroskopie-Messwerte wird/werden der Gehalt und/oder die Konzentration des mindestens einen Ions oder Moleküls des mindestens einen Inhaltsstoffs und/oder der Gehalt und/oder die Konzentration des mindestens einen Ions oder Moleküls der Lösungschemikalie 6 und/oder Reaktionsgemischs in der Lösung und/oder dem Lösungsmittel eingestellt.

Es können - je nach gewünschter Prozessführung des jeweiligen hydrometallurgischen Aufbereitungsprozesses oder nasschemischen Reaktionsprozesses - produktionstechnisch online und zeitnah die Zusammensetzung des gebildeten Lösungsmittels, insbesondere des Beizmediums, sowie Al- und/oder Cl-Ionen haltiger Verfahrens- und Prozessmedien, insbesondere der Waschlösung, des Lösungsmittels, des Reaktionsgemischs und/oder der Lösung und/oder des erhaltenen Reaktionsproduktes und/oder Nebenproduktes 7 kontinuierlich online mittels der Nahinfrarotspektroskopie-Analytik (NIR) gemessen und ermittelt werden sowie dem die Produktions- und Reaktionsschritte oder Produktions- und Reaktionsprozesse abbildenden und das Verfahren zur produktionstechnischen Aufbereitung des Ausgangsstoffes steuernden Regelmodell zugeführt werden. Dabei werden die jeweiligen Mittel und Lösungen mit Strahlung im Nahinfrarotbereich durchstrahlt. Die Nahinfrarot-Analytik umfasst des Weiteren die Erfassung der Messwerte sowie die Darstellung dieser beispielsweise durch ein Absorptions-Spektrum. Als nahes Infrarot wird der Bereich des elektromagnetischen Spektrums bezeichnet, dessen Strahlung eine Wellenzahl von 4.000 cm⁻¹ bis 12.500 cm⁻¹ aufweist. Vorzugsweise wird die Nahinfrarot-Analytik mit einer Strahlung mit der Wellenzahl von 4.000 cm⁻¹ bis 7.500 cm⁻¹, in einer bevorzugteren Ausführungsform mit der Wellenzahl von 4.000 cm⁻¹ bis 5.000 cm⁻¹ und 5.300 cm⁻¹ bis 6.500 cm⁻¹ durchgeführt. Die Apparaturen, Methoden und Mittel, mit denen die erfindungsgemäße Nahinfrarot-Analytik durchgeführt wird, sind solche, die im Stand der Technik bekannt sind und bei Bedarf ohne weiteres vom Fachmann derart angepasst werden können, dass das erfindungsgemäße Verfahren durchgeführt werden kann. Als Meßkette kann jede im Stand der Technik bekannte Meßkette verwendet werden und bei Bedarf vom Fachmann ohne Weiteres derart angepasst werden, dass das erfindungsgemäße Verfahren durchgeführt werden kann. Herkömmliche Meßketten umfassen eine Lichtquelle, Lichtleiter, Transmissionssonde mit einer Spaltweite von <2 mm, Lichtleiter, Spektrometer und eine Auswerteeinheit, wobei die Auswerteeinheit üblicherweise ein Computer ist. Die Messung des Spektrums kann durch ein Interferometer und Wandlung des Interferogramms durch Fourier-Transformation erfolgen, wobei das Spektrum erhalten wird, oder aber durch ein Gitterspektrometer oder Diode Array-Spektrometer, wobei direkt ein Spektrum erhalten wird.

Die erhaltenen Absorptionsspektren können mittels herkömmlicher Methoden ausgewertet werden. So können die erhaltenen Absorptionsspektren mittels einer multivariaten Kalibration, beispielsweise mit Partial Least Squares Regression oder Principal Components Regression, mit den Spektraldaten von früheren Referenzmethoden desselben Messpfades verglichen werden. Hierbei sind die Zusammensetzungen und Konzentrationen der Referenzproben bekannt und die Konzentrationen und weitere charakteristische Werte der untersuchten Medien können errechnet werden. Als Referenzmethode für PAC kann jede im Stand der Technik bekannte und geeignete Methode verwendet werden. Für diesen Zweck eignet sich insbesondere die Titrationen nach der Norm EN 1302 "Flockungsmittel auf Aluminiumbasis - Analytische Methoden". Hierbei wird Al mit EDTA, Zn und Cl-Ionen potentiometrisch mit AgNO₃ gemessen und aus dem Ergebnis ebenfalls die Basizität berechnet. Es ist dabei zu beachten, dass die Referenzproben identische oder ähnliche Zusammensetzungen und Konzentrationen, wie die zu untersuchenden Medien aufweisen.

Die Nahinfrarotspektroskopie-Analytik wird erfindungsgemäß online und kontinuierlich durchgeführt. "Kontinuierlich", wie hierin verwendet, bezieht sich auf die Durchführung der Analytik ohne Unterbrechung in einer festgelegten Taktfrequenz parallel und zeitgleich zu dem chemischen Verfahren. Das chemische Verfahren kann dabei auch kontinuierlich sein, wobei "kontinuierlich" dabei bedeutet, dass das Verfahren ohne Unterbrechung durchgeführt wird, mit Ausnahme von Stillständen für Reparatur, Reinigung oder unvorhergesehenen Ereignissen. Online bedeutet, dass das analytische Messgerät im Prozessmedium vor Ort (ohne Probenentnahme) misst und der genommene Messwert wird in ein elektronisches Signal (vorzugsweise analog, 4 - 20 mA) umgewandelt, welches als Eingangssignal in der Prozesssteuerung unmittelbar registriert und verwendet werden kann.

Die Messung mittels Infrarot-Analytik kann an jedem Ort innerhalb der Prozessanlage erfolgen. Die Messungen können beispielsweise in Behältern, in denen die hierin offenbarten Mittel und Lösungen aufbewahrt werden, in Reaktoren, in denen die Ausgangsstoffe und die hierin offenbarten Mittel und Lösungen miteinander reagieren, oder in Verbindungsleitungen, die Reaktoren miteinander, Behälter miteinander und/oder Reaktoren mit Behältern verbinden, vorgenommen werden. Diese Verbindungsleitungen sind typischerweise Rohre. Hierbei können die Behälter dem Verfahren zugeschaltet sein oder auch nicht. Optional können auch mehrere Behälter dem Verfahren zugeschaltet sein. Die erfindungsgemäße Nahinfrarot-Analytik wird online während des laufenden Verfahrens durchgeführt, kann aber auch offline, wenn das Verfahren aktuell unterbrochen ist, durchgeführt werden. In einer bevorzugten Ausführungsform ist mindestens ein Messpunkt 14 der Nahinfrarot-Analytik (NIR) innerhalb eines Behälters und/oder eines Reaktors und/oder einer Verbindungsleitung. Vorzugsweise ist der mindestens eine Messpunkt 14 der Nahinfrarot-Analytik druckseitig und stromabwärts einer Umwälzpumpe angeordnet. Druckseitig nach einer Umwälzpumpe angeordnete Messpunkte 14 sind vorteilhaft, da eine gute Durchströmung des Messspaltes gewährleistet wird.

Die Nahinfrarotspektroskopie-Analytik kann je nach Bedarf in beliebigen Zeitabständen durchgeführt werden. Die Analytik kann hierbei sowohl in regelmäßigen als auch in unregelmäßigen Zeitabständen erfolgen. Die Zeitabstände können hierbei zwischen 0,1 sec und 900 sec oder zwischen 0,1 sec und 300 durchgeführt. Vorzugsweise betragen die Zeitabstände zwischen den einzelnen aufeinanderfolgenden Messungen der Nahinfrarot-Analytik zwischen 0,1 sec und 30 sec, bevorzugter zwischen 0,5 sec und 15 sec und am bevorzugtesten zwischen 1 sec und 10 sec. Dies gewährt eine zeitnahe Verfahrensanalyse und die mittels der Nahinfrarotspektroskopie-Analytik erhaltenen Messwerte können online und kontinuierlich zur Steuerung oder Regelung des Verfahrens eingesetzt werden. Es hat sich gezeigt, dass die Abweichung der mittels Nahinfrarot-Analytik ermittelten Werte von der tatsächlichen Konzentration der Hauptkomponenten Cl und Al in Massen % unter 0,05 % bei realen Bedingungen liegt. Die Messdaten können in Werte mit beliebigen physikalischen Einheiten, wie beispielsweise in %, mol/L oder g/L, dargestellt werden. Durch die erfindungsgemäße Analytik kann ebenfalls etwaig auftretenden Schwankungen im Verfahren, die beispielsweise durch Defekte und durch das Hinzuschalten oder - abschalten von Behältern oder Reaktoren auftreten können, zeitnah entgegengewirkt werden. Im Gegensatz hierzu ist herkömmliche offline Analytik, wie beispielsweise Titrationen, nachteilig, da sie zeitaufwendig und daher eine zeitlich unmittelbare Einflussnahme auf das Verfahren nicht möglich ist. Ferner wären die regelmäßig durchzuführenden Analysen mit einem hohen apparativen und/oder personellen Aufwand verbunden.

Als Sondenmaterial kann Glas oder Kunststoff verwendet werden. Diese Materialien sind gegenüber den eingesetzten korrosiven Prozessmedien stabil und preiswert. Alternativ können auch Sonden aus beständigeren Metallen, wie Ta oder Nb, eingesetzt werden. Durch die Verwendung von Lichtleitern und Multiplexern können die Spektrometer zentral und geschützt aufgestellt und die Lichtsignale mehrerer Sonden gemessen werden, die teilweise bis zu 120 m entfernt sein können. Dadurch werden die Kosten pro Messstelle 14 auf ein Minimum reduziert.

Alle hierin offenbarten Lösungen weisen optional weitere Bestandteile auf, die im Stand der Technik bekannt sind, wie beispielsweise Stabilisatoren, pH-Regler und Tenside.

Alle Sachverhalte, Gegenstände und Ausführungsformen, die für das Verfahren beschrieben sind, sind auch auf die Verwendung anwendbar und umgekehrt.

Die in dieser Anmeldung verwendeten Abkürzungen chemischer Elemente entsprechen der üblichen Nomenklatur. So wird mit Si Silizium, mit Al Aluminium, mit Cl Chlor, mit HCl Salzsäure, mit HF Flusssäure (Flurwasserstoffsäure) und mit H₂SO₄ Schwefelsäure bezeichnet.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Zusammensetzungen bezieht sich diese Angabe nicht auf die absolute Menge an Molekülen, sondern auf die Art des Bestandteils. "Mindestens ein Inhaltsstoff" bedeutet daher beispielsweise ein oder mehrere Inhaltsstoff, d.h. eine oder mehrere verschiedene Arten von Inhaltsstoffe. Zusammen mit Mengenangaben beziehen sich die Mengenangaben auf die Gesamtmenge der entsprechend bezeichneten Art von Bestandteil, wie bereits oben definiert.

"Natürliche Zahl", wie hierin verwendet, bezieht sich auf alle natürlichen Zahlen, wie 1, 2, 3, 4, 5, 6, 7, 8, 9 und mehr.

"Online", wie hierin verwendet, bezieht sich auf den Ort und die Zeit der Messung, die zeitgleich zur Durchführung des Verfahrens in der Prozessanlage stattfindet, in der das Verfahren durchgeführt wird.

"Basizität", wie hierin verwendet, richtet sich auf die bekannte Eigenschaft des PAC und wird anhand der nachstehenden Formel berechnet: Basizität = n(OH-Ionen)/(3 x n(Al-Ionen)), wobei n die Anzahl der jeweiligen Ionen ist.

"Lösung", wie hierin verwendet, bezieht sich auf eine Lösung, die Wasser enthält. Hierbei enthält die Lösung üblicherweise neben Wasser 0 bis 50 % Gew.-% gelöste Stoffe. Die Lösung kann auch zusätzlich ungelöste Feststoffe enthalten.

"Beizmedium", wie hierin verwendet, bezieht sich auf ein Medium, dass zum Beizen verwendet wird. "Beizen", wie hierin verwendet, ist die Behandlung eines festen Körpers mit einem Beizmedium, um bestimmte Stoffe aus dem zu beizenden Körper zu lösen.

"Wellenzahl", wie hierin verwendet, bezieht sich auf die allgemeingültige Bedeutung dieses Begriffs in der Spektroskopie und ist der Kehrwert der Wellenlänge λ.

Bei dem metallischen Inhaltsstoff des ersten oder zweiten Ausgangstoffs handelt es sich insbesondere um ein Element aus der Gruppe der Metalle.

Bei dem flüssigen Lösungsmittel und/oder der Lösungschemikalie 6 handelt es sich vorzugsweise um Salzsäure.

In Anlehnung an das in der WO 2011/127603 A beschriebene Verfahren umfasst die Erfindung auch einen kaskadierten Auflöse-und Waschprozess zur Reinigung von Silizium in einem Si-Al-Komplex, bei welchem der Si-Al-Komplex hintereinander mit einer schwache, optional einer mittelstarken und dann einer starken Beizlösung in Kontakt gebracht wird.

Dabei wird relativ reines Silizium erhalten, welches anschließend in beispielsweise zwei Stufen gewaschen und dann getrocknet wird. Mit dem Aluminium können auch andere Verunreinigungen gelöst werden. Die Sequenz kann somit beispielsweise aus Lösen 1' - Lösen 2' - Waschen 1' - Waschen 2' bestehen, mit den jeweils verwendeten Medien Beizlösung 1', Beizlösung 2', Waschwasser 1' und Waschwasser 2'. Dabei wird das verunreinigte Rohmaterial in eine Vorwärtsrichtung und das Wasser und die auflösende Chemikalie (Salzsäure) in die Gegenrichtung durch den Prozess geführt. Dabei wird die Beizlösung 1' und die Beizlösung 2' auf einer bestimmten Konzentration, spez. Dichte und/oder pH gehalten, indem zur Beizlösung 2' Spülwasser 1' und frische Salzsäure dosiert wird und zu Beizlösung 1' Beizlösung 2' und Spülwasser 1' dosiert wird.

Aus dem Umwälzbehälter der Beizlösung 1' wird das (Neben-)Produkt, Polyaluminiumchloridhydroxid, entnommen. Die Zusammensetzung der Medien, insbesondere von schwacher und starker Beizlösung, muss konstant gehalten werden, um die Produktqualität und einen stabilen Prozess zu gewährleisten. Dabei können ein oder mehrere Beizbehältern mit einer festgelegten Taktung gleichzeitig von einem Umwälzbehälter versorgt werden. Folgende, stark variable Faktoren haben einen Einfluss auf die Zusammensetzung:
- Aluminiumeintrag, beeinflusst durch:
- Reaktivität des Rohmaterials
- Schon verstrichene Beizdauer (Reaktivität sinkt über die Beizdauer mit schwindendem Restaluminium)
- Anzahl an Beizbehältern, über die umgewälzt wird.
- Temperatur
- Wasserverdampfung über die Absaugung der Beizbehälter, beeinflusst durch:
- Anzahl der Beizbehälter, über die umgewälzt wird.
- Absaugvolumenstrom, da dieser über die Reaktivität beziehungsweise über die verstrichene Beizdauer veränderlich ist.

Gesteuert wird die Zusammensetzung über die Zugabe von Medien im Gegenstrom, d.h. die Beizlösung 2' wird durch Zugabe von Waschwasser 1' und überazeotrop Salzsäure und die Beizlösung 1' wird durch Zugabe von Beizlösung 2' gesteuert. Die Beizlösung 1' (wässriges Polyaluminiumchloridhydroxid) hat dabei drei Regelgrößen: Aluminium-Konzentration und Verhältnis aus Chlorid und Aluminium-Konzentration (oder gleichwertig: die Basizität) im Beizmedium, die Aluminiumchlorid-Konzentration in der Beizlösung 2' und die Stellgröße ist die Zugabe an Beizlösung 2'.

Die Beizlösung 2' (bestehend aus Aluminiumchlorid und wässriger Salzsäure) hat als Regelgröße die Salzsäure-Konzentration in der Beizlösung 2' und als Stellgröße die Zugabe von über-azeotroper Salzsäure. Die Spülwasserzugabe wird über den Pegel im Umwälzbehälter gesteuert.

Eine Prozesssteuerung über ein reines mathematisches Modell, aufbauend auf der Stöchiometrie der Reaktion, mit Eingangsgrößen wie Rohstoff-Gewicht, Rohstoff Aluminium-Gehalt und/oder Umsatz und den sich daraus ergebenden Massen-und/oder Volumenströmen von Säuren und Wasser würde eine zu hohe Ungenauigkeit bezüglich der Eingangsgrößen aufweisen, womit die Volatilität der Produkt - Konzentrationen außerhalb der geforderten Grenzen liegen kann. Nur die Einhaltung der engen Garantiewerte für das Produkt (vor allem max. Al-Konzentration und möglichst geringes Cl/Al-Verhältnis) ergibt ein wirtschaftlich verwertbares Nebenprodukt, welches für die Rentabilität des Gesamtprozesses wichtig ist.

Weiters kann in Zuständen, in denen der Prozess nicht stabil läuft (Anfahren, Abstellen, defekte Behälter, ...), keine konstante Menge an Medien dosiert werden. Das Hinzuschalten von Behältern erfolgt üblicherweise in einem Takt < 1h, üblicherweise 30 Minuten, und Spitzen in der Reaktivität beispielsweise beim Polieren dauern kürzer als 15 min. Somit ist ersichtlich, dass eine off-line Messmethode beispielsweise nach EN 1302 (s.u.) mit Analysenzeiten um die 30 Minuten bei Durchführung im Stundentakt und eine anschließende, manuelle Anpassung der Dosierung nicht praktikabel ist. Zusätzlich wäre durch die regelmäßig durchzuführenden Titrationen für die hohe Anzahl an Messstellen ein hoher apparativer und personeller Aufwand notwendig. Ein rentabler Gesamtprozess lässt sich daher vorteilhaft nur durch Anwendung der erfindungsgemäßen NIR-Online-Analytik erreichen.

Eine weitere Anwendung der Online-Methode ist die Herstellung von Polyaluminiumchloridhydroxid aus Aluminiumhydroxid und Salzsäure, die kontinuierlich oder batch-weise erfolgen kann, wobei durch eine Online-Prozessüberwachung eine gleichbleibende Produktqualität sichergestellt werden kann.

### Bezugszeichenliste:

- 1: Ausgangsstoff
- 3: Lösungsstufe
- 6: Lösungschemikalie
- 7: Nebenprodukt
- 8: Waschstufe
- 11: Waschflüssigkeit
- 13: Endprodukt
- 14: Messpunkt

## Patentansprüche

1. Verfahren zur produktionstechnischen hydrometallurgischen Aufbereitung oder produktionstechnischen nasschemischen Umsetzung eines festen Ausgangsstoffes (1) aus der Gruppe Si-Al-Komplex, Aluminiumhydroxid, Aluminiumchlorid oder Bauxit zu einem chemischen Reaktionsprodukt und/oder einem prozesstechnischen Nebenprodukt (7), wobei der Ausgangsstoff (1) hydrometallurgisch oder nasschemisch mit einem flüssigen, Cl-Ionen haltigen wässrigen Medium zur Reaktion gebracht und das chemische Reaktionsprodukt und/oder das Nebenprodukt (7) in Form einer Lösung erhalten wird/werden, die mindestens das als metallischer Inhaltsstoff im Ausgangsstoff (1) enthaltene Aluminium (Al) in Form von Polyaluminiumchloridhydroxid (PAC) gemäß der Formel AlCl₃-ₘ(OH)ₘ enthält, wobei die hydrometallurgische Aufbereitung das Lösen des metallischen Inhaltsstoffs Aluminium (Al) aus einer aluminiumhaltigen Verbindung des Ausgangsstoffes (1) umfasst,
**dadurch gekennzeichnet,**
**dass** in der erhaltenen Lösung und/oder dem erhaltenen Reaktionsprodukt und/oder dem erhaltenen Nebenprodukt (7) online kontinuierlich während des laufenden Produktionsprozesses zumindest der Gehalt und/oder die Konzentration an Aluminium und/oder eines aus dem Cl-Ionen haltigen wässrigen Medium stammenden Cl-Ions oder Cl-Moleküls mittels Nahinfrarot-Analytik, insbesondere Nahinfrarotspektroskopie-Analytik (NIR), mit zwischen 0,1 sec und 30 sec, vorzugsweise zwischen 0,5 sec und 15 sec, vorzugsweise zwischen 1 sec und 10 sec, betragenden Zeitabständen zwischen den einzelnen aufeinanderfolgenden Messungen der Nahinfrarot-Analytik ermittelt wird/werden und auf Basis der ermittelten sowie zeitnah an ein mathematisches Regelmodell übermittelten Nahinfrarot-Messwerte, insbesondere Nahinfrarotspektroskopie-Messwerte, der mittels des Regelmodells beeinflussbare hydrometallurgische Aufbereitungsprozess unter zeitlich unmittelbarer Einflussnahme online derart gesteuert und/oder geregelt wird, dass das erhaltene Polyaluminiumchloridhydroxid (PAC) eine Basizität im Bereich von 30 - 90 %, bevorzugt im Bereich von 64 - 70 %, aufweist.

2. Verfahren nach Anspruch 1 zur Produktion von Polyaluminiumchloridhydroxid (PAC) durch hydrometallurgisches Lösen von Aluminium in Polyaluminiumchloridhydroxid (PAC) unter Verwendung eines ein Lösungsmittel ausbildenden Beizmediums oder anderer chlorid-haltiger oder aluminium- und chlorid-haltiger, eine Waschlösung, ein Lösungsmittel, das Cl-Ionen haltige wässrige Medium und/oder ein Reaktionsgemisch umfassender Prozessmedien, wobei deren Zusammensetzung an Cl-Ionen und/oder Cl-haltigen Molekülen und/oder Al-Ionen und/oder Al-haltigen Molekülen kontinuierlich online mittels Nahinfrarot-Analytik, insbesondere Nahinfrarotspektroskopie-Analytik (NIR), gemessen wird und die erhaltenen Analysenergebnisse dazu verwendet werden, den hydrometallurgische Aufbereitungsprozess mittels des mathematischen Regelmodells zu steuern.

3. Verfahren nach Anspruch 1 oder 2, zur produktionstechnischen Herstellung einer Verbindung der Formel AlCl₃₋ₘ(OH)ₘ in dem Cl-Ionen haltigen wässrigen Medium oder mittels des Cl-Ionen haltigen wässrigen Mediums, wobei m eine rationale Zahl zwischen 0 und 3 ist und das Verfahren die Herstellung und/oder Verwendung mindestens einer Cl- und Al-Ionen haltigen Lösung und/oder mindestens eines Cl- und Al-Ionen haltigen Lösungsmittels und/oder mindestens eines Cl- und Al-Ionen haltigen wässrigen Mediums, insbesondere des Reaktionsproduktes und/oder des Nebenproduktes (7), umfasst, wobei mittels der Nahinfrarot-Analytik, insbesondere der Nahinfrarotspektroskopie-Analytik (NIR), die Konzentration der Cl- und/oder Al- Ionen der mindestens einen Lösung und/oder des mindestens einen Lösungsmittels und/oder des mindestens einen wässrigen Mediums, insbesondere des Reaktionsproduktes und/oder des Nebenproduktes (7), online kontinuierlich ermittelt wird/werden und die dadurch erhaltenen Messwerte das Verfahren oder den hydrometallurgische Aufbereitungsprozess online mittels des mathematischen Regelmodells steuern.

4. Verfahren nach einem der vorhergehenden Ansprüche zur produktionstechnischen hydrometallurgischen Aufbereitung des festen Ausgangsstoffes (1) zu einem Endprodukt (13) und dem Nebenprodukt (7) durch hydrometallurgisches Lösen und/oder chemische Reaktion des im Ausgangsstoff (1) enthaltenen metallischen Inhaltsstoffes Aluminium mittels des Cl-Ionen haltigen wässrigen Mediums in einem eine Reaktionsstufe (3) und eine Waschstufe (8) umfassenden Aufbereitungsprozess, welcher die Zuführung des Ausgangstoffes (1) zu der Reaktionsstufe (3) umfasst, in welcher der Ausgangsstoff (1) dem Einfluss eines oder des flüssigen Lösungsmittels unterworfen und unter Überführung seines metallischen Inhaltsstoffs Aluminium in die erhaltene Lösung und/oder das Nebenprodukt (7) zu einem Silizium-Zwischenprodukt hydrometallurgisch aufbereitet wird, wonach das in der Reaktionstufe (3) erhaltene Silizium-Zwischenprodukt der Waschstufe (8) zugeführt und in der Waschstufe (8) dem Einfluss einer Waschflüssigkeit (11) unterworfen wird sowie dort eine sich dabei bildende und den mittels der Waschflüssigkeit (11) vom Zwischenprodukt abgespülten metallischen Inhaltsstoff Aluminium sowie die Waschflüssigkeit (11) enthaltende Waschlösung und das aufbereitete Endprodukt (13) gebildet werden, wonach das aufbereitete Endprodukt (13) aus der Waschstufe (8) abgeführt wird, wobei bei der Aufbereitung in der Lösung und/oder der Waschlösung und/oder dem Lösungsmittel und/oder dem Nebenprodukt (7) der Gehalt und/oder die Konzentration an aus dem gelösten Inhaltsstoff Aluminium stammender Al-Ionen oder Al-Moleküle und/oder an aus dem Lösungsmittel stammender Cl- Ionen und/oder Cl-Moleküle oder Cl- und Al-Ionen und/oder Cl-Moleküle und Al-Moleküle online kontinuierlich mittels der Nahinfrarot - Analytik, insbesondere der Nahinfrarotspektroskopie-Analytik (NIR), ermittelt und auf Basis der ermittelten Nahinfrarot-Messwerte, insbesondere Nahinfrarotspektroskopie-Messwerte, der Zufluss von Lösungsmittel in die Reaktionsstufe (3) oder eine Prozeßstufe und/oder von Waschlösung in die Reaktionsstufe (3) und/oder von Waschflüssigkeit in die Waschstufe (8) online auf Basis des mathematischen Regelmodells gesteuert oder geregelt wird/werden.

5. Verfahren nach einem der Ansprüche 2 - 4 zur produktionstechnischen Herstellung des Reaktionsproduktes und/oder des Nebenproduktes (7) mittels des Cl-Ionen haltigen wässrigen Mediums durch chemische Reaktion des festen Ausgangsstoffes mit dem oder einem chlorid-haltigen oder aluminium- und chlorid-haltigen flüssigen Lösungsmittel in einem mindestens eine Reaktionsstufe umfassenden Reaktionsprozess, wobei in der Reaktionsstufe der feste Ausgangsstoff und das flüssige Lösungsmittel miteinander in Kontakt und unter Bildung des Reaktionsproduktes und/oder des Nebenproduktes (7) zur Reaktion gebracht werden und das erhaltene Reaktionsprodukt und/oder Nebenprodukt (7) aus der Reaktionsstufe abgeführt wird/werden, wobei bei der Herstellung des Reaktionsproduktes und/oder des Nebenproduktes (7) in dem Lösungsmittel und/oder dem Nebenprodukt (7) und/oder dem Reaktionsprodukt der Gehalt und/oder die Konzentration an aus dem gelösten metallischen Inhaltsstoff Aluminium stammenden Al-Ionen und/oder Al-Molekülen und/oder mindestens eines aus dem Lösungsmittel stammenden Cl-Ions oder Cl-Moleküls online kontinuierlich mittels der Nahinfrarot - Analytik, insbesondere der Nahinfrarotspektroskopie-Analytik (NIR), ermittelt und auf Basis der ermittelten Nahinfrarot-Messwerte, insbesondere Nahinfrarotspektroskopie-Messwerte, der Zufluss von Lösungsmittel in die Reaktionsstufe (3) online auf Basis des mathematischen Regelmodells gesteuert oder geregelt wird/werden.

6. Verfahren nach Anspruch 4 oder 5, **dadurch gekennzeichnet, dass** auf Basis der ermittelten Nahinfrarot-Messwerte, insbesondere Nahinfrarotspektroskopie-Messwerte, der Gehalt und/oder die Konzentration an Al-Ionen oder Al-Molekülen und der Gehalt und/oder die Konzentration an Cl-Ionen oder Cl-Molekülen einer Lösungschemikalie (6) und/oder des die chemische Reaktion in der Reaktionsstufe bewirkenden Reaktionsgemischs oder des Cl-Ionen haltigen wässrigen Mediums in der Lösung und/oder dem Cl-Ionen haltigen wässrigen Medium und/oder dem Reaktionsprodukt und/oder dem Nebenprodukt (7) eingestellt wird/werden.

7. Verfahren nach einem der Ansprüche 4 - 6, **dadurch gekennzeichnet, dass** der Reaktionsstufe (3) eine Waschlösung zugeführt und ein oder das ein Beizmedium ausbildende Lösungsmittel aus der Lösungschemikalie (6) und der Waschlösung gebildet wird.

8. Verfahren nach einem der Ansprüche 4 - 7, **dadurch gekennzeichnet, dass** in der Reaktionsstufe (3) die Lösung und das Nebenprodukt (7) in Form einer Al-haltigen wässrige Flüssigkeit als Polyaluminiumchloridhydroxid (PAC) erhalten und aus der Reaktionsstufe (3) abgeführt wird/werden.

9. Verfahren nach einem der Ansprüche 4 - 8, **dadurch gekennzeichnet, dass** die Zusammensetzung des in der Reaktionsstufe (3) gebildeten Lösungsmittels, insbesondere des Beizmediums, sowie der Al- und/oder Cl-Ionen haltigen Verfahrens- und Prozessmedien der Gruppe aus Waschlösung, Cl-Ionen haltigem wässrigem Medium, Nebenprodukt (7) und Lösung, kontinuierlich online mittels der Nahinfrarot - Analytik, insbesondere der Nahinfrarotspektroskopie-Analytik, gemessen und ermittelt werden sowie dem die Aufbereitungs- und Reaktionsschritte des jeweiligen Produktionsprozesses abbildenden und das Verfahren zur produktionstechnischen Aufbereitung des festen Ausgangsstoffes (1) und zur produktionstechnischen Herstellung des Reaktionsprodukts und/oder des Nebenprodukts (7) steuernden mathematischen Regelmodell zugeführt werden.

10. Verfahren nach einem der Ansprüche 4, **dadurch gekennzeichnet, dass** der Ausgangsstoff (1) ein Silizium(Si)-haltiges Material, insbesondere ein Si-Al-Komplex, ist oder umfasst, die Lösungschemikalie (6) eine Lauge oder eine Säure, insbesondere HCl, HF, H₂SO₄ oder eine Mischung der vorgenannten ist oder umfasst, die Waschflüssigkeit (11) Wasser ist oder umfasst sowie die Lösung, das Reaktionsprodukt und/oder das Nebenprodukt (7) Polyaluminiumchloridhydroxid (PAC) als Al- und Cl-haltige wässrige Flüssigkeit ist/sind oder umfasst/umfassen und das Zwischenprodukt und/oder das Endprodukt (13) Si ist oder umfasst.

11. Verfahren nach einem der Ansprüche 5 - 9, **dadurch gekennzeichnet, dass** der metallische Inhaltsstoff des Ausgangsstoffes (1) ein Al-Ion oder Al-haltiges Molekül und das mindestens eine Ion oder Molekül des Lösungsmittels und/oder der Lösungschemikalie (6) ein Cl-Ion oder CI-haltiges Molekül ist/sind oder umfasst/umfassen und dass das Verfahren das hydrometallurgische Lösen von Aluminium (Al) aus der Al-enthaltenden Verbindung umfasst.

12. Verfahren nach einem der vorhergehenden Ansprüche, **dadurch gekennzeichnet, dass** in der als Reaktionsprodukt oder Nebenprodukt (7) gewonnenen Lösung mittels der Online - Regelung oder Online - Steuerung mittels des mathematischen Regelmodells ein möglichst hoher Al - Gehalt und ein möglichst geringes Cl/Al - Verhältnis eingestellt werden.

13. Verfahren nach einem der vorhergehenden Ansprüche, **dadurch gekennzeichnet, dass** das wässrige Polyaluminiumchloridhydroxid (PAC) als Reaktionsprodukt oder Nebenprodukt (7) in Form einer Polyaluminiumchloridhydroxidlösung gewonnen und der Aufbereitungsprozess oder Reaktionsprozess mittels der Nahinfrarot - Analytik, insbesondere Nahinfrarotspektroskopie-Analytik, online derart geregelt und gesteuert wird, dass in der Polyaluminiumchloridhydroxidlösung ein Massenanteil an Aluminium zwischen 42 und 124 g Al/kg Polyaluminiumchloridhydroxid (PAC) eingestellt wird.

14. Verfahren nach einem der vorhergehenden Ansprüche, **dadurch gekennzeichnet, dass** der Ausgangsstoff (1) Aluminiumhydroxid (Al(OH)₃) ist, das mit Salzsäure (HCl) zur Reaktion gebracht wird.

15. Verfahren nach einem der vorhergehenden Ansprüche, **dadurch gekennzeichnet, dass** das hergestellte Reaktionsprodukt oder Nebenprodukt (7) Polyaluminiumchloridhydroxid (PAC) der Formel, AlCl₃₋ₘ(OH)ₘ ist, wobei m eine rationale Zahl zwischen 0 und 3 ist.

16. Verfahren nach einem der vorhergehenden Ansprüche, **dadurch gekennzeichnet, dass** die Nahinfrarot - Analytik, insbesondere die Nahinfrarotspektroskopie-Analytik, das Lösungsmittel und/oder die Waschlösung und/oder die Lösung und/oder das Reaktionsprodukt und/oder das Nebenprodukt (7) mit einer Wellenzahl der Nahinfrarotstrahlung zwischen 4.000 cm⁻¹ und 7.500 cm⁻¹, insbesondere mit einer Wellenzahl der NIR-Strahlung zwischen 4. 300 cm⁻¹ und 4.800 cm⁻¹ sowie 5.300 cm⁻¹ und 6.500 cm⁻¹ durchstrahlt und das erhaltenen Absorptionsspektrum misst.

17. Verfahren nach einem der vorhergehenden Ansprüche, **dadurch gekennzeichnet, dass** die Messung mittels der Nahinfrarot - Analytik, insbesondere der Nahinfrarotspektroskopie-Analytik, an mindestens einem Messpunkt (14) vorgenommen wird, der innerhalb eines Behälters oder eines Reaktors oder einer Verbindungsleitung angeordnet ist, welche(r) das Lösungsmittel und/oder die Waschlösung und/oder die Lösung und/oder das Reaktionsprodukt oder das Nebenprodukt (7) aufnimmt oder führt.

18. Verfahren nach Anspruch 17, **dadurch gekennzeichnet, dass** der Messpunkt (14) druckseitig stromabwärts einer dem Behälter und/oder dem Reaktor und/oder der Verbindungsleitung zugeordneten Umwälzpumpe angeordnet ist.

19. Verfahren nach einem der vorhergehenden Ansprüche zur Produktion von Polyaluminiumchloridhydroxid zur Wasseraufbereitung, wobei der Ausgangsstoff (1) Aluminiumhydroxid oder Aluminiumchlorid oder Bauxit ist.

20. Verwendung von Nahinfrarot - Analytik, insbesondere Nahinfrarotspektroskopie-Analytik, zur kontinuierlichen Online-Verfahrens- oder Prozesssteuerung eines Verfahrens nach einem oder mehreren der Ansprüche 1 - 19 zur Herstellung einer Verbindung der Formel AlₙCl₍₃ₙ₋ₘ₎(OH)ₘ in Form einer wässrigen Lösung auf Basis der mittels der Nahinfrarot - Analytik, insbesondere der Nahinfrarotspektroskopie-Analytik, für die wässrige Lösung ermittelten Nahinfrarot-Messwerte, insbesondere Nahinfrarotspektroskopie-Messwerte, für den Gehalt an Al-Ionen in der wässrigen Lösung.

21. Verwendung nach Anspruch 20, **dadurch gekennzeichnet, dass** Polyaluminiumchloridhydroxid (PAC) in Form der wässrigen Lösung der Formel AlₙCl_{(3n- m)}(OH)ₘ als Reaktionsprodukt und/oder Nebenprodukt (7) hergestellt und deren/dessen jeweiliger Gehalt oder jeweilige Konzentration an Cl-Ionen und/oder Al-Ionen mittels der Nahinfrarot-Analytik, insbesondere der Nahinfrarotspektroskopie-Analytik, gemessen und ermittelt werden sowie die erhaltenen Messwerte einem in einer das Verfahren nach einem oder mehreren der Ansprüche 1 - 20 oder den jeweiligen produktionstechnischen Aufbereitungs- oder Reaktionsprozess kontinuierlich steuernden und/oder regelnden Einrichtung hinterlegten mathematischen Prozess- und/oder Regelmodel zugeführt werden.

## Claims

1. Method for manufacturing-related hydrometallurgical treatment or manufacturing-related wet-chemical conversion of a solid starting material (1) from the group Si-Al complex, aluminium hydroxide, aluminium chloride and bauxite to form a chemical reaction product and/or a process-related byproduct (7), wherein the starting material (1) is hydrometallurgically or wet-chemically reacted with a liquid aqueous medium containing Cl ions and the chemical reaction product and/or the byproduct (7) is or are obtained in the form of a solution containing at least the aluminium (Al), which is present as metallic ingredient in the starting material (1), in the form of polyaluminium chloride hydroxide (PAC) according to the formula AlCl₃₋ₘ(OH)ₘ, wherein the hydrometallurgical treatment comprises dissolving the metallic ingredient of aluminium (Al) from a compound, which contains aluminium, of the starting material (1),
**characterised in that**
in the obtained solution and/or the obtained reaction product and/or the obtained byproduct (7), at least the content and/or concentration of aluminium and/or of a CI ion or CI molecule originating from the aqueous medium containing Cl ions is or are continuously determined on-line during the ongoing production process by means of near-infrared analytics, particularly near-infrared spectroscopic analytics (NIR), with time intervals between the individual successive measurements of the near-infrared analytics of between 0.1 seconds and 30 seconds, preferably between 0.5 and 15 seconds, preferably between 1 second and 10 seconds, and based on the determined near-infrared measurement values, particularly near-infrared spectroscopic measurement values, which are transferred in real time to a mathematical regulation model, the hydrometallurgical treatment process, which can be influenced by means of the regulation model, is so controlled and/or regulated on-line with direct influence with respect to time that the obtained polyaluminium chloride hydroxide (PAC) has a basicity in the range of 30 to 90%, preferably in the range of 64 to 70%.

2. Method according to claim 1 for production of polyaluminium chloride hydroxide (PAC) by hydrometallurgical dissolution of aluminium in polyaluminium chloride hydroxide (PAC) with use of a pickling medium forming a solvent or of other process media containing chloride or containing aluminium and chloride and comprising a washing solution, a solvent, the aqueous medium containing Cl ions and/or a reaction mixture, wherein the composition thereof of Cl ions and/or molecules containing Cl and/or Al ions and/or molecules containing Al is continuously measured on-line by means of near-infrared analytics, particularly near-infrared spectroscopic analytics (NIR), and the obtained analysis results are used for controlling the hydrometallurgical treatment process by means of the mathematical regulation model.

3. Method according to claim 1 or 2 for manufacturing-related production of a compound of the formula AlCl₃₋ₘ(OH)ₘ in the aqueous medium containing Cl ions or by means of the aqueous medium containing Cl ions, wherein m is a rational number between 0 and 3 and the method comprises the production and/or use of at least one solution containing Cl ions and Al ions and/or at least one solvent containing Cl ions and Al ions and/or at least one aqueous medium containing Cl ions and Al ions, particularly the reaction product and/or the byproduct (7), wherein the concentration of the Cl ions and/or Al ions in the at least one solution and/or at least one solvent and/or at least one aqueous medium, particularly the reaction product and/or the byproduct (7), is continuously determined on-line by means of near-infrared analytics, particularly near-infrared spectroscopic analytics (NIR), and the measurement values thereby obtained control the method or the hydrometallurgical treatment process on-line by means of the mathematical regulation model.

4. Method according to any one of the preceding claims for manufacturing-related hydrometallurgical treatment of the solid starting material (1) to form an end product (13) and the byproduct (7) by hydrometallurgical dissolution and/or chemical reaction of the metallic ingredient of aluminium, which is present in the starting material (1), by means of the aqueous medium, which contains Cl ions, in a treatment process, which comprises a reaction stage (3) and a washing stage (8) and includes feed of the starting material (1) to the reaction stage (3), in which the starting material (1) is subjected to the influence of a or the liquid solvent and is hydrometallurgically processed to form a silicon intermediate product under transfer of its metallic ingredient of aluminium to the obtained solution and/or the byproduct (7), after which the silicon intermediate product obtained in the reaction stage (3) is delivered to the washing stage (8) and in the washing stage (8) is subjected to the influence of a washing liquid (11), and a washing solution - which then forms and contains the metallic ingredient of aluminium, which is washed from the intermediate product by means of the washing liquid (11), and the washing liquid (11) - and the prepared end product (13) are formed there, after which the prepared end product (13) is removed from the washing stage (8), wherein for the treatment the content and/or the concentration in the solution and/or the washing solution and/or the solvent and/or the byproduct (7) of Al ions or Al molecules, which originate from the dissolved ingredient of aluminium, and/or of Cl ions and/or Cl molecules or Cl ions and Al ions and/or Cl molecules and Al molecules, which originate from the solvent, is or are continuously determined on-line by means of near-infrared analytics, particularly near-infrared spectroscopic analytics (NIR), and based on the determined near-infrared measurement values, particularly near-infrared spectroscopic measurement values, the feed of solvent to the reaction stage (3) or a process stage and/or of washing solution to the reaction stage (3) and/or of washing liquid to the washing stage (8) is or are controlled or regulated on-line on the basis of the mathematical regulation model.

5. Method according to any one of claims 2 to 4 for manufacturing-related production of the reaction product and/or the byproduct (7) by means of the aqueous solution containing Cl ions through chemical reaction of the solid starting material with the or a liquid solvent, which contains chloride or contains aluminium and chloride, in a reaction process comprising at least one reaction stage, wherein in the reaction stage the solid starting material and the liquid solvent are brought into contact with one another and reacted to form the reaction product and/or the byproduct (7) and the obtained reaction product and/or byproduct (7) is or are removed from the reaction stage, wherein for the production of the reaction product and/or the byproduct (7) the content and/or the concentration in the solvent and/or the byproduct (7) and/or the reaction product of the Al ions and/or Al molecules, which originate from the dissolved metallic ingredient of aluminium, and/or of at least one Cl ion or Cl molecule, which originates from the solvent, is or are continuously determined on-line by means of near-infrared analytics, particularly near-infrared spectroscopic analytics (NIR), and based on the determined near-infrared measurement values, particularly near-infrared spectroscopic measurement values, the feed of solvent to the reaction stage (3) is controlled or regulated on-line on the basis of the mathematical regulation model.

6. Method according to claims 4 or 5, **characterised in that** the content and/or the concentration of Al ions or Al molecules and the content and/or concentration of Cl ions or Cl molecules of a solution chemical (6) and/or of the reaction mixture, which produces the chemical reaction in the reaction stage, or of the aqueous medium, which contains Cl ions, in the solution and/or the aqueous medium, which contains Cl ions, and/or the reaction product and/or the byproduct (7) is or are set on the basis of the determined near-infrared measurement values, particularly near-infrared spectroscopic measurement values.

7. Method according to any one of claims 4 to 6, **characterised in that** a washing solution is fed to the reaction stage (3) and a or the solvent, which forms a pickling medium, is formed from the solution chemical (6) and the washing solution.

8. Method according to any one of claims 4 to 7, **characterised in that** the solution and the byproduct (7) are obtained in the reaction stage (3) in the form of an aqueous liquid, which contains Al, as polyaluminium chloride hydroxide (PAC) and are removed from the reaction stage (3).

9. Method according to any one of claims 4 to 8, **characterised in that** the composition of the solvent formed in the reaction stage (3), particularly the pickling medium, as well as of the method media and process media, which contain Al ions and/or Cl ions, of the group consisting of washing solution, aqueous medium containing Cl ions, byproduct (7) and solution, is continuously measured and determined on-line by means of near-infrared analytics, particularly near-infrared spectroscopic analytics, and delivered to the mathematical regulation model which simulates the treatment and reaction steps of the respective production process and controls the method for manufacturing-related treatment of the solid starting material (1) and for manufacturing-related production of the reaction product and/or of the byproduct (7).

10. Method according to any one of claims 4 to 8, **characterised in that** the starting material (1) is or comprises a material containing silicon (Si), particularly an Si-AI complex, the solution chemical (6) is or comprises an alkali or an acid, particularly HCl, HF, H₂SO₄ or a mixture of the aforesaid, the washing liquid (11) is or comprises water, and the solution, the reaction product and/or the byproduct (7) is/are or comprises/comprise polyaluminium chloride hydroxide (PAC) as aqueous liquid containing Al and Cl and the intermediate product and/or the end product (13) is/are or comprises/comprise Si.

11. Method according to any one of claims 5 to 9, **characterised in that** the metallic ingredient of the starting material (1) is or comprises an Al ion or a molecule containing Al and the at least one ion or molecule of the solvent and/or the solution chemical (6) is or comprises a Cl ion or a molecule containing Cl and the method comprises hydrometallurgical dissolution of aluminium (Al) from the compound containing Al.

12. Method according to any one of the preceding claims, **characterised in that** a highest possible Al content and a smallest possible Cl/Al ratio are set in the solution, which is obtained as reaction product or byproduct (7), by means of on-line regulation or on-line control by way of the mathematical regulation model.

13. Method according to any one of the preceding claims, **characterised in that** the aqueous polyaluminium chloride hydroxide (PAC) as reaction product or byproduct (7) is obtained in the form of a polyaluminium chloride hydroxide solution and the treatment process or reaction process is so regulated and controlled on-line by means of near-infrared analytics, particularly near-infrared spectroscopic analytics, that a mass proportion of aluminium of between 42 and 124 grams of Al per kilogram of polyaluminium chloride hydroxide (PAC) is set in the polyaluminium chloride hydroxide solution.

14. Method according to any one of the preceding claims, **characterised in that** the starting material is aluminium hydroxide (Al(OH)₃) reacted with hydrochloric acid (HCl).

15. Method according to any one of the preceding claims, **characterised in that** the produced reaction product or byproduct (7) is polyaluminium chloride hydroxide (PAC) of the formula AₗCl₃₋ₘ(OH)ₘ, wherein m is a rational number between 0 and 3.

16. Method according to any one of the preceding claims, **characterised in that** the near-infrared analytics, particularly near-infrared spectroscopic analytics, penetratively radiate the solvent and/or the washing solution and/or the solution and/or the reaction product and/or the byproduct (7) with a wave number of near-infrared radiation between 4,000 cm⁻¹ and 7,500 cm⁻¹, particularly with a wave number of NIR radiation between 4,300 cm⁻¹ and 4,800 cm⁻¹ as well as 5,300 cm⁻¹ and 6,500 cm⁻¹, and measure the obtained absorption spectrum.

17. Method according to any one of the preceding claims, **characterised in that** the measurement by means of near-infrared analytics, particularly near-infrared spectroscopic: analytics, is carried out at at least one measuring point (14) located within a container, reactor or connecting line which receives or conducts the solvent and/or the washing solution and/or the solution and/or the reaction product or the byproduct (7).

18. Method according to claim 17, **characterised in that** the measuring point (14) is arranged at the pressure side downstream of a circulating pump associated with the container and/or the reactor and/or the connecting line.

19. Method particularly according to any one of the preceding claims for production of polyaluminium chloride hydroxide for water preparation, wherein the starting material (1) is aluminium hydroxide or aluminium chloride and/or bauxite.

20. Use of near-infrared analytics, particularly near-infrared spectroscopic analytics, for continuous on-line method control or process control of a method according to one or more of claims 1 to 19 for production of a compound of the formula AlₙCl₍₃ₙ₋ₘ₎(OH)ₘ in the form of an aqueous solution on the basis of near-infrared measurement values determined for the aqueous solution by means of near-infrared analytics, particularly near-infrared spectroscopic analytics, particularly near-infrared spectroscopic measurement values, for the content of Al ions in the aqueous solution.

21. Use according to claim 20, **characterised in that** polyaluminium chloride hydroxide (PAC) in the form of the aqueous solution of the formula AlₙCl₍₃ₙ₋ₘ₎(OH)ₘ is produced as reaction product and/or byproduct (7) and the respective content or concentration thereof of Cl ions and/or Al ions is measured and determined by means of near-infrared analytics, particularly near-infrared spectroscopic analytics, and the obtained measurement values are delivered to a mathematical process and/or regulation model filed in equipment continuously controlling and/or regulating the method according to one or more of claims 1 to 20 or the respective manufacturing-related treatment process or reaction process.

## Revendications

1. Procédé destiné à la préparation à l'intervention d'un procédé hydrométallurgique en termes de technique de production ou destiné à la transformation à l'intervention d'un procédé chimique par voie humide en termes de technique de production d'une substance de départ solide (1) choisie parmi le groupe qui comprend un complexe de silicium-aluminium, de l'hydroxyde d'aluminium, du chlorure d'aluminium ou de la bauxite dans le but d'obtenir un produit réactionnel chimique et/ou un sous-produit (7) en termes de technique de production ; dans lequel on met en réaction la substance de départ (1) à l'intervention d'un procédé hydrométallurgique ou à l'intervention d'un procédé chimique par voie humide avec un milieu aqueux liquide contenant des ions chlore et on obtient le produit réactionnel chimique et/ou le sous-produit (7) sous la forme d'une solution qui contient au moins l'aluminium (Al), contenu dans la substance de départ (1) à titre de constituant métallique, sous la forme d'hydroxyde de chlorure de polyaluminium (PAC) répondant à la formule AlCl₃₋ₘ(OH)ₘ ; dans lequel la préparation à l'intervention d'un procédé hydrométallurgique comprend la dissolution de l'aluminium (Al) à titre de constituant métallique à partir d'un composé de la substance de départ (1), qui contient de l'aluminium, **caractérisé en ce que** l'on détermine dans la solution obtenue et/ou dans le produit réactionnel obtenu et/ou dans le sous-produit (7) obtenu, en ligne, en continu, au cours du processus de production en train de se dérouler, au moins la teneur et/ou la concentration en ce qui concerne l'aluminium et/ou un ion chlore ou une molécule de chlore émanant du milieu liquide contenant des ions chlore, au moyen d'une technique d'analyse dans l'infrarouge proche, en particulier d'une technique d'analyse par spectroscopie dans l'infrarouge proche (NIR), avec des intervalles de temps qui se situent entre 0,1 seconde et 30 secondes, de préférence entre 0,5 seconde et 15 secondes, de préférence entre 1 seconde et 10 secondes, entre les mesures individuelles successives de la technique d'analyse dans l'infrarouge proche et, sur base des valeurs de mesure dans l'infrarouge proche, en particulier sur base de valeurs de mesure par spectroscopie dans l'infrarouge proche, qui ont été déterminées et qui ont été transmises en temps utile à un modèle de régulation mathématique, on commande et/ou on règle en ligne le processus de préparation à l'intervention d'un procédé hydrométallurgique, qui peut être influencé au moyen du modèle de régulation, en étant soumis à une influence directe dans le temps, d'une manière telle que l'hydroxyde de chlorure de polyaluminium (PAC) que l'on a obtenu présente une basicité dans la plage de 30 à 90 %, de préférence dans la plage de 64 à 70 %.

2. Procédé selon la revendication 1, destiné à la production d'hydroxyde de chlorure de polyaluminium (PAC) par l'intermédiaire d'une dissolution de l'aluminium à l'intervention d'un procédé hydrométallurgique dans de l'hydroxyde de chlorure de polyaluminium (PAC) en utilisant un milieu de mordançage qui donne lieu à la formation d'un solvant ou en utilisant d'autres milieux de processus contenant du chlorure ou contenant de l'aluminium et du chlorure, qui comprennent une solution de lavage, un solvant, le milieu aqueux qui contient des ions chlore et/ou un mélange réactionnel ; dans lequel on mesure leur composition en ce qui concerne les ions chlore et/ou les molécules contenant du chlore et/ou les ions aluminium et/ou les molécules contenant de l'aluminium, en continu, en ligne, au moyen d'une technique d'analyse dans l'infrarouge proche, en particulier d'une technique d'analyse par spectroscopie dans l'infrarouge proche (NIR) et on utilise les résultats d'analyse que l'on a obtenus pour la commande du processus de préparation à l'intervention d'un procédé hydrométallurgique au moyen du modèle de régulation mathématique.

3. Procédé selon la revendication 1 ou 2, destiné à la préparation en termes de technique de production d'un composé répondant à la formule AlCl₃₋ₘOH)ₘ dans le milieu aqueux contenant des ions chlore ou au moyen du milieu aqueux contenant des ions chlore ; dans lequel m représente un nombre rationnel entre 0 et 3 ; et le procédé comprend la préparation et/ou l'utilisation d'au moins une solution contenant des ions chlore et des ions aluminium et/ou en utilisant au moins un solvant contenant des ions chlore et des ions aluminium et/ou en utilisant au moins un milieu aqueux contenant des ions chlore et des ions aluminium, en particulier en utilisant le produit réactionnel et/ou le sous-produit (7) ; dans lequel, au moyen de la technique d'analyse dans l'infrarouge proche, en particulier de la technique d'analyse par spectroscopie dans l'infrarouge proche (NIR), on détermine la concentration en ce qui concerne les ions chlore et/ou les ions aluminium de ladite au moins une solution et/ou dudit au moins un solvant et/ou dudit au moins un milieu aqueux, en particulier du produit réactionnel et/ou du sous-produit (7), en ligne, en continu, et les valeurs de mesure que l'on a obtenues de cette manière commandent le procédé ou le processus de préparation à l'intervention d'un procédé hydrométallurgique, en ligne, au moyen du modèle de régulation mathématique.

4. Procédé selon l'une quelconque des revendications précédentes, destiné à la préparation de la substance de départ solide (1) à l'intervention d'un procédé hydrométallurgique en termes de technique de production afin d'obtenir un produit final (13) et le sous-produit (7) par l'intermédiaire d'une dissolution à l'intervention d'un procédé hydrométallurgique et/ou d'une mise en réaction chimique de l'aluminium à titre de constituant métallique contenu dans la substance de départ (1), au moyen du milieu aqueux contenant des ions chlore, dans un processus de préparation qui comprend une étape de mise en réaction (3) et une étape de lavage (8), processus qui comprend l'alimentation de la substance de départ (1) à l'étape de mise en réaction (3) dans laquelle on soumet la substance de départ (1) à l'influence d'un solvant ou du solvant liquide et on la prépare un intervention d'un procédé hydrométallurgique en transférant son aluminium à titre de constituant métallique dans la solution obtenue et/ou dans le sous-produit (7) afin d'obtenir un produit intermédiaire à base de silicium ; par la suite, on transfère le produit intermédiaire à base de silicium que l'on a obtenu au cours de l'étape de mise en réaction (3) et on le soumet, dans l'étape de lavage (8) à l'influence d'un liquide de lavage (11) et on obtient, au cours de cette étape, une solution de lavage qui se forme en l'occurrence et qui contient l'aluminium à titre de constituant métallique, qui a été séparé par lavage à partir du produit intermédiaire au moyen du liquide de lavage (11) et le liquide de lavage (11), ainsi que le produit final (13) qui a été préparé ; après quoi, on évacue de l'étape de lavage (8) le produit final (13) qui a été préparé ; dans lequel, au cours de la préparation dans la solution et/ou dans la solution de lavage et/ou dans le solvant et/ou dans le sous-produit (7) on détermine la teneur et/ou la concentration en ce qui concerne les ions aluminium ou les molécules d'aluminium émanant de l'aluminium à titre de constituant dissous et/ou les ions chlore et/ou les molécules de chlore ou les ions chlore et les ions aluminium et/ou les molécules de chlore et les molécules d'aluminium émanant du solvant, en ligne, en continu, au moyen de la technique d'analyse dans l'infrarouge proche, en particulier de la technique d'analyse par spectroscopie dans l'infrarouge proche (NIR), et sur base des valeurs de mesure dans l'infrarouge proche, en particulier sur base de valeurs de mesure par spectroscopie dans l'infrarouge proche, qui ont été déterminées, on commande ou on règle l'apport du solvant dans l'étape de mise en réaction (3) ou dans une étape opératoire et/ou de la solution de lavage dans l'étape de mise en réaction (3) et/ou du liquide de lavage dans l'étape de lavage (8) en ligne sur base du modèle de régulation mathématique.

5. Procédé selon l'une quelconque des revendications 2 à 4 destinés à la préparation en termes de technique de production du produit réactionnel et/ou du sous-produit (7) au moyen du milieu aqueux qui contient des ions chlore par l'intermédiaire d'une mise en réaction chimique de la substance de départ solide avec le solvant ou un solvant liquide contenant un chlorure ou contenant de l'aluminium et un chlorure, dans un processus de mise en réaction qui comprend au moins une étape de mise en réaction ; dans lequel, dans l'étape de mise en réaction, on met en contact réciproque la substance de départ solide et le solvant liquide et on les amène à réagir dans le but d'obtenir le produit de réactionnel et/ou le sous-produit (7) et on évacue hors de l'étape de mise en réaction le produit réactionnel et/ou le sous-produit (7) que l'on a obtenu(s) ; dans lequel, lors de la préparation du produit réactionnel et/ou du sous-produit (7), on détermine dans le solvant et/ou dans le sous-produit (7) et/ou dans le produit réactionnel, la teneur et/ou la concentration en ce qui concerne les ions aluminium et/ou les molécules d'aluminium émanant de l'aluminium à titre de constituant métallique dissous et/ou en ce qui concerne au moins un ion chlore ou au moins une molécule de chlore émanant du solvant, en ligne, en continu, au moyen de la technique d'analyse dans l'infrarouge proche, en particulier de la technique d'analyse par spectroscopie dans l'infrarouge proche (NIR) et, sur base des valeurs de mesure dans l'infrarouge proche, en particulier des valeurs de mesure de la spectroscopie dans l'infrarouge proche qui ont été déterminées, on commande ou on règle l'apport du solvant dans l'étape de mise en réaction (3) en ligne sur base du modèle de régulation mathématique.

6. Procédé selon la revendication 4 ou 5, **caractérisé en ce que**, sur base des valeurs de mesure dans l'infrarouge proche, en particulier des valeurs de mesure de la spectroscopie dans l'infrarouge proche qui ont été déterminées, on règle la teneur et/ou la concentration en ce qui concerne les ions aluminium ou les molécules d'aluminium et la teneur et/ou la concentration en ce qui concerne les ions chlore ou les molécules de chlore d'un produit chimique en solution (6) et/ou du mélange réactionnel qui entraîne la réaction chimique dans l'étape de mise en réaction ou du milieu aqueux contenant des ions chlore dans la solution et/ou dans le milieu aqueux contenant des ions chlore et/ou dans le produit réactionnel et/ou dans le sous-produit (7).

7. Procédé selon l'une quelconque des revendications 4 à 6, **caractérisé en ce que** l'on achemine à l'étape de mise en réaction (3) une solution de lavage et on forme un solvant ou le solvant qui met en oeuvre un milieu de mordançage à partir du produit chimique en solution (6) et de la solution de lavage.

8. Procédé selon l'une quelconque des revendications 4 à 7, **caractérisé en ce que** l'on obtient, dans l'étape de mise en réaction (3) la solution et le sous-produit (7) sous la forme d'un liquide aqueux qui contient de l'aluminium, sous la forme de l'hydroxyde de chlorure de polyaluminium (PAC), et on l'évacue/les évacue hors de l'étape de mise en réaction (3).

9. Procédé selon l'une quelconque des revendications 4 à 8, **caractérisé en ce que** l'on mesure et l'on détermine la composition du solvant, en particulier du milieu de mordançage qui s'est formé dans l'étape de mise en réaction (3), ainsi que des milieux de procédé et de processus contenant des ions aluminium et/ou des ions chlore, du groupe constitué par la solution de lavage, le milieu aqueux contenant des ions chlore, le sous-produit (7) et la solution, en continu, en ligne, au moyen de la technique d'analyse dans l'infrarouge proche, en particulier de la technique d'analyse par spectroscopie dans l'infrarouge proche, et on l'achemine au modèle de régulation mathématique qui représente les étapes de préparation et de mise en réaction du processus de production respectif et qui commande le procédé destiné à la préparation, en termes de techniques de production, de la substance de départ (1) et destiné à la fabrication du produit réactionnel et/ou du sous-produit (7), en termes de techniques de production.

10. Procédé selon la revendication 4, **caractérisé en ce que** la substance de départ (1) est ou comprend une matière contenant du silicium (Si), en particulier un complexe de silicium-aluminium ; le produit chimique en solution (6) est ou comprend une lessive ou un acide, en particulier HCl, HF, H₂SO₄, ou un mélange de ces derniers ; le liquide aqueux (11) est ou comprend de l'eau ; et la solution, le produit réactionnel et/ou le sous-produit (7) est/sont ou comprend/comprennent de l'hydroxyde de chlorure de polyaluminium (PAC) sous la forme d'un liquide aqueux contenant de l'aluminium et du chlore ; et le produit intermédiaire et/ou le produit final (13) est ou comprend du silicium.

11. Procédé selon l'une quelconque des revendications 5 à 9, **caractérisé en ce que** le constituant métallique de la substance de départ (1) est ou comprend un ion aluminium ou une molécule contenant de l'aluminium et ledit au moins un ion ou ladite au moins une molécule du solvant et/ou du produit chimique en solution (6) est/sont ou comprend/comprennent un ion chlore ou une molécule contenant un ion chlore ou contenant du chlore ; et **en ce que** le procédé comprend la dissolution de l'aluminium (Al) à l'intervention d'un procédé hydrométallurgique, à partir du composé contenant de l'aluminium.

12. Procédé selon l'une quelconque des revendications précédentes, **caractérisé en ce que**, dans la solution que l'on a obtenue sous la forme d'un produit réactionnel ou sous la forme d'un sous-produit (7), on règle, par l'intermédiaire du réglage en ligne ou de la commande en ligne, au moyen du modèle de régulation mathématique, une teneur en aluminium la plus élevée possible ou un rapport Cl/Al le moins élevé possible.

13. Procédé selon l'une quelconque des revendications précédentes, **caractérisé en ce que** l'on obtient de l'hydroxyde de chlorure de polyaluminium (PAC) aqueux qui prend la forme du produit réactionnel ou du sous-produit (7) sous la forme d'une solution hydroxyde de chlorure de polyaluminium et on règle et on commande le processus de préparation ou le processus de mise en réaction au moyen de la technique d'analyse dans l'infrarouge proche, en particulier de la technique d'analyse par spectroscopie dans l'infrarouge proche, en ligne, d'une manière telle que l'on règle, dans la solution d'hydroxyde de chlorure de polyaluminium, une fraction massique d'aluminium entre 42 et 124 g de Al/kg d'hydroxyde de chlorure de polyaluminium (PAC).

14. Procédé selon l'une quelconque des revendications précédentes, **caractérisé en ce que** la substance de départ (1) représente de l'hydroxyde d'aluminium (Al(OH)₃) que l'on met à réagir avec de l'acide chlorhydrique (HCI).

15. Procédé selon l'une quelconque des revendications précédentes, **caractérisé en ce que** le produit réactionnel ou le sous-produit (7) qui a été préparé représente de l'hydroxyde de chlorure de polyaluminium (PAC) répondant à la formule AlCl₃₋ₘ(OH)ₘ, dans laquelle m représente un nombre rationnel entre 0 et 3.

16. Procédé selon l'une quelconque des revendications précédentes, **caractérisé en ce que**, dans la technique d'analyse dans l'infrarouge proche, en particulier la technique d'analyse par spectroscopie dans l'infrarouge proche, on expose le solvant et/ou la solution de lavage et/ou la solution et/ou le produit réactionnel et/ou le sous-produit (7) à un rayonnement avec un nombre d'ondes du rayonnement dans l'infrarouge proche entre 4.000 cm⁻¹ et 7.500 cm⁻¹, en particulier avec un nombre d'ondes du rayonnement dans l'infrarouge proche entre 4.300 cm⁻¹ et 4.500 cm⁻¹ et entre 5.300 cm⁻¹ et 6.500 cm⁻¹ et on mesure le spectre d'absorption obtenu.

17. Procédé selon l'une quelconque des revendications précédentes, **caractérisé en ce que** l'on procède à la mesure au moyen de la technique d'analyse dans l'infrarouge proche, en particulier de la technique d'analyse par spectroscopie dans l'infrarouge proche, à au moins un point de mesure (14) qui est disposé à l'intérieur d'un récipient ou d'un réacteur ou d'un conduit de liaison qui réceptionne ou qui guide le solvant et/ou la solution de lavage et/ou la solution ou le produit réactionnel ou le sous-produit (7).

18. Procédé selon la revendication 17, **caractérisé en ce que** le point de mesure (14) est disposé, du côté pression, en aval d'une pompe de circulation qui est attribuée au récipient et/ou au réacteur et/ou au conduit de liaison.

19. Procédé selon l'une quelconque des revendications précédentes destiné à la production d'hydroxyde de chlorure de polyammonium pour le traitement de l'eau ; dans lequel la substance de départ (1) est de l'hydroxyde d'aluminium ou du chlorure d'aluminium ou de la bauxite.

20. Utilisation d'une technique d'analyse dans l'infrarouge proche, en particulier d'une technique d'analyse par spectroscopie dans l'infrarouge proche, pour la commande d'un procédé ou d'un processus en ligne en continu d'un procédé selon une ou plusieurs des revendications 1 à 19, destiné à la préparation d'un composé répondant à la formule AlₙCl₍₃ₙ₋ₘ₎(OH)ₘ sous la forme d'une solution aqueuse sur base des valeurs de mesure dans l'infrarouge proche, en particulier des valeurs de mesure par spectroscopie dans l'infrarouge proche, déterminées pour la solution aqueuse, au moyen de la technique d'analyse dans l'infrarouge proche, en particulier de la technique d'analyse par spectroscopie dans l'infrarouge proche, pour la teneur de la solution aqueuse en ions aluminium.

21. Utilisation selon la revendication 20, **caractérisée en ce que** l'on prépare de l'hydroxyde de chlorure de polyammonium (PAC) sous la forme de la solution aqueuse répondant à la formule AlₙCl₍₃ₙ₋ₘ₎(OH)ₘ, à titre de produit réactionnel et/ou de sous-produit (7) et l'on mesure et on détermine la teneur respective ou la concentration respective dudit hydroxyde ou de ladite solution en ce qui concerne les ions chlore et/ou les ions aluminium au moyen de la technique d'analyse dans l'infrarouge proche, en particulier de la technique d'analyse par spectroscopie dans l'infrarouge proche, et on transfère les valeurs de mesure que l'on a obtenues à un modèle mathématique de processus et/ou de régulation qui a été déposé dans un mécanisme qui commande et/ou qui règle en continu le procédé selon une ou plusieurs des revendications 1 à 20 ou les processus respectifs de préparation ou de mise en réaction en termes de techniques de production.
